# EUROPEAN PATENT APPLICATION

(11) **EP 4 852 526 A1**
(43) Date of publication of application: **09.12.2026**
(21) Application number: 24921049.3
(22) Date of filing: 02.02.2024
(51) Int. Cl.: H04W 52/02

(54) **INFORMATION PROCESSING METHOD RELATED TO MEASUREMENT OF SECONDARY CELL, COMMUNICATION DEVICE, AND STORAGE MEDIUM**

(71) Applicant: Beijing Xiaomi Mobile Software Co., Ltd., Beijing 100085 (CN)
(72) Inventor: LUO, Xingyi, Beijing 100085 (CN); WANG, Lei, Beijing 100085 (CN)
(74) Representative: Stöckeler, Ferdinand
(86) International application number: PCT/CN2024/075637
(87) International publication number: WO 2025/160995

(57) **Abstract**

Embodiments of the present disclosure provide an information processing method related to measurement of a secondary cell, a communication device, a communication system, and a storage medium. The information processing method related to measurement of a secondary cell comprises: on the basis of a closing period of a reference signal of a first cell, determining execution of at least one among measurement of the first cell and reporting a measurement result of the first cell.

## Description

### FIELD

The present disclosure relates to the field of communication technology, in particular to an information processing method related to measurement of a secondary cell, a communication device and a storage medium.

### BACKGROUND

In some cases, in order to achieve network energy saving, a network device may deactivate part of reference signals, e.g., synchronization signal and (physical broadcast channel (PBCH)) block (SSB), and/or channel state information-reference signal (CSI-RS).

### SUMMARY

Embodiments of the present disclosure provide an information processing method related to measurement of a secondary cell, a communication device and a storage medium.

In a first aspect, the present disclosure provides in some embodiments an information processing method related to measurement of a secondary cell, executed by a terminal, including determining that at least one of measurement of a first cell or reporting of a measurement result of the first cell is to be executed based on an off-period of a reference signal of the first cell.

In a second aspect, the present disclosure provides in some embodiments an information processing method related to measurement of a secondary cell, executed by a network device, including: receiving a measurement result of a first cell and first information sent by a terminal, in which the first information is used to indicate N1 and/or N2, N1 represents the number of valid measurement occasions in a measurement window corresponding to the measurement result, N2 represents the number of invalid measurement occasions in the measurement window, the valid measurement occasions are located outside the off-period, and the invalid measurement occasions are located within the off-period; and determining whether the measurement result is a valid result based on the first information, in which the valid result is used to determine whether to add and/or remove the first cell.

In a third aspect, the present disclosure provides in some embodiments an information processing method related to measurement of a secondary cell, executed by a network device, including: receiving a measurement result of a first cell sent by a terminal; determining an off-period of a reference signal of the first cell; and determining whether the measurement result is a valid result based on the off-period of the reference signal of the first cell, in which the valid result is used to determine whether to add and/or remove the first cell.

In a fourth aspect, the present disclosure provides in some embodiments an information processing method related to cell measurement, executed by a network device of a first cell, including sending second information to a second cell. The second information is used to indicate an off-period of a reference signal of the first cell, the second information is used by the second cell to determine whether a measurement result of the first cell is a valid result, and the valid result is used to determine whether to add and/or remove the first cell.

In a fifth aspect, the present disclosure provides in some embodiments a terminal, including a processing module configured to determine that at least one of measurement of a first cell or reporting of a measurement result of the first cell is to be executed based on an off-period of a reference signal of the first cell.

In a sixth aspect, the present disclosure provides in some embodiments a network device, including: a reception module configured to receive a measurement result of a first cell and first information sent by a terminal, in which the first information is used to indicate N1 and/or N2, N1 represents the number of valid measurement occasions in a measurement window corresponding to the measurement result, N2 represents the number of invalid measurement occasions in the measurement window, the valid measurement occasions are located outside the off-period, and the invalid measurement occasions are located within the off-period; and a processing module configured to determine whether the measurement result is a valid result based on the first information, in which the valid result is used to determine whether to add and/or remove the first cell.

In a seventh aspect, the present disclosure provides in some embodiments a network device, including: a reception module configured to receive a measurement result of a first cell sent by a terminal; and a processing module configured to determine an off-period of a reference signal of the first cell, and determine whether the measurement result is a valid result based on the off-period of the reference signal of the first cell, in which the valid result is used to determine whether to add and/or remove the first cell.

In an eighth aspect, the present disclosure provides in some embodiments a network device, including a sending module configured to send second information to a second cell. The second information is used to indicate an off-period of a reference signal of a first cell, the second information is used by the second cell to determine whether a measurement result of the first cell is a valid result, and the valid result is used to determine whether to add and/or remove the first cell.

In a ninth aspect, the present disclosure provides in some embodiments a communication device, including one or more processors. The one or more processors are configured to call instructions, so that the communication device performs the information processing method related to measurement of a secondary cell in the first aspect to the fourth aspect.

In a tenth aspect, the present disclosure provides in some embodiments a storage medium storing therein instructions. In a case that the instructions are executed by a communication device, the communication device performs the information processing method related to measurement of a secondary cell in the first aspect to the fourth aspect.

According to the technical solutions provided in the embodiments of the present disclosure, whether to execute the measurement of the first cell and/or the reporting of the measurement result is determined based on the off-period of the reference signal of the first cell, so as to prevent the occurrence of such a problem that the first cell, as a serving cell of the terminal, is removed and/or added erroneously in a case that the terminal executes the measurement and/or the reporting of the measurement result no matter whether the reference signal of the first cell is deactivated. It should be appreciated that the above-mentioned general description and the following detailed description are for illustrative and explanatory purposes, but shall not be used to limit the present disclosure.

### BRIEF DESCRIPTION OF THE DRAWINGS

The drawings herein are incorporated into, and constitute a part of, the specification, show the embodiments of the present disclosure, and are used to explain a principle of the embodiments of the present disclosure together with the specification.
FIG. 1A is a schematic view showing architecture of a communication system according to an illustrative embodiment of the present disclosure;
FIG. 1B is a schematic view showing SSB-off according to an illustrative embodiment of the present disclosure;
FIG. 1C is a schematic view showing carrier aggregation according to an illustrative embodiment of the present disclosure;
FIG. 1D is a schematic view showing an information element (IE) of a measurement resource according to an illustrative embodiment of the present disclosure;
FIG. 1E is a schematic view showing time-domain distribution and measurement of SSBs according to an illustrative embodiment of the present disclosure;
FIG. 1F is a schematic view showing the measurement and reporting of the SSB according to an illustrative embodiment of the present disclosure;
FIG. 1G is a schematic view showing a change in states of a secondary cell according to an illustrative embodiment of the present disclosure;
FIG. 1H is a flow chart of activation or deactivation of the secondary cell according to an illustrative embodiment of the present disclosure;
FIG. 1I is a schematic view showing interfaces among network devices according to an illustrative embodiment of the present disclosure;
FIG. 1J is a schematic view showing SSB-off and measurement at a terminal according to an illustrative embodiment of the present disclosure;
FIG. 2A is a flow chart of an information processing method related to measurement of a secondary cell according to an illustrative embodiment of the present disclosure;
FIG. 2B is a flow chart of an information processing method related to measurement of a secondary cell according to an illustrative embodiment of the present disclosure;
FIG. 2C is a flow chart of an information processing method related to measurement of a secondary cell according to an illustrative embodiment of the present disclosure;
FIG. 2D is a flow chart of an information processing method related to measurement of a secondary cell according to an illustrative embodiment of the present disclosure;
FIG. 3A is a flow chart of an information processing method related to measurement of a secondary cell according to an illustrative embodiment of the present disclosure;
FIG. 3B is a flow chart of an information processing method related to measurement of a secondary cell according to an illustrative embodiment of the present disclosure;
FIG. 3C is a flow chart of an information processing method related to measurement of a secondary cell according to an illustrative embodiment of the present disclosure;
FIG. 4A is a flow chart of an information processing method related to measurement of a secondary cell according to an illustrative embodiment of the present disclosure;
FIG. 4B is a flow chart of an information processing method related to measurement of a secondary cell according to an illustrative embodiment of the present disclosure;
FIG. 5 is a flow chart of an information processing method related to measurement of a secondary cell according to an illustrative embodiment of the present disclosure;
FIG. 6A is a schematic view showing SSB-off and measurement at a terminal according to an illustrative embodiment of the present disclosure;
FIG. 6B is a schematic view showing SSB-off and measurement at a terminal according to an illustrative embodiment of the present disclosure;
FIG. 6C is a flow chart of an information processing method related to measurement of a secondary cell according to an illustrative embodiment of the present disclosure;
FIG. 6D is a flow chart of an information processing method related to measurement of a secondary cell according to an illustrative embodiment of the present disclosure;
FIG. 6E is a flow chart of an information processing method related to measurement of a secondary cell according to an illustrative embodiment of the present disclosure;
FIG. 6F is a flow chart of an information processing method related to measurement of a secondary cell according to an illustrative embodiment of the present disclosure;
FIG. 6G is a flow chart of an information processing method related to measurement of a secondary cell according to an illustrative embodiment of the present disclosure;
FIG. 6H is a flow chart of an information processing method related to measurement of a secondary cell according to an illustrative embodiment of the present disclosure;
FIG. 6I is a flow chart of an information processing method related to measurement of a secondary cell according to an illustrative embodiment of the present disclosure;
FIG. 6J is a flow chart of an information processing method related to measurement of a secondary cell according to an illustrative embodiment of the present disclosure;
FIG. 7A is a schematic view showing a terminal according to an illustrative embodiment of the present disclosure;
FIG. 7B is a schematic view showing a network device according to an illustrative embodiment of the present disclosure;
FIG. 7C is a schematic view showing a network device according to an illustrative embodiment of the present disclosure;
FIG. 7D is a schematic view showing a network device according to an illustrative embodiment of the present disclosure;
FIG. 8A is a schematic view showing a communication device according to an illustrative embodiment of the present disclosure; and
FIG. 8B is a schematic view showing a chip according to an illustrative embodiment of the present disclosure.

### DETAILED DESCRIPTION

The present disclosure provides in some embodiments an information processing method related to measurement of a secondary cell, a communication device, a communication system and a storage medium.

In a first aspect, the present disclosure provides in some embodiments an information processing method related to cell measurement, executed by a terminal, including determining that at least one of measurement of a first cell or reporting of a measurement result of the first cell is to be executed based on an off-period of a reference signal of the first cell.

Based on the above-mentioned scheme, whether to execute the measurement of the first cell and/or the reporting of the measurement result is determined based on the off-period of the reference signal of the first cell, so as to prevent the occurrence of such a problem that the first cell, as a serving cell of the terminal, is removed and/or added erroneously in a case that the terminal executes the measurement and/or the reporting of the measurement result no matter whether the reference signal of the first cell is deactivated.

In some embodiments of the present disclosure in the first aspect, the determining that at least one of the measurement of the first cell or the reporting of the measurement result of the first cell is to be executed based on the off-period of the reference signal of the first cell includes at least one of: determining whether the measurement of the first cell is to be executed based on whether the off-period overlaps with a measurement window of the first cell; determining whether the reporting of the measurement result of the first cell is to be executed based on whether the off-period overlaps with the measurement window of the first cell; determining a filtering method for the measurement result of the first cell based on whether the off-period overlaps with the measurement window of the first cell; or determining a reporting method for the measurement result of the first cell based on whether the off-period overlaps with the measurement window of the first cell.

Based on the above-mentioned scheme, various optional modes about whether to execute, by the terminal, the measurement of the first cell and/or the reporting of the measurement result are defined, and during the implementation, the mode may be set according to the practical need.

In some embodiments of the present disclosure in the first aspect, the determining whether the measurement of the first cell is to be executed based on whether the off-period overlaps with the measurement window of the first cell includes at least one of: determining that the measurement of the first cell is to be executed in a case that the off-period does not overlap with the measurement window of the first cell; determining that the measurement of the first cell is not to be executed in a case that the off-period at least partially overlaps with the measurement window of the first cell; determining whether the measurement of the first cell is to be executed based on a degree of overlap between the off-period and the measurement window in a case that the off-period at least partially overlaps with the measurement window of the first cell; or determining that the measurement of the first cell is not to be executed within an overlapping time period between the measurement window and the off-period in a case that the off-period at least partially overlaps with the measurement window of the first cell.

Based on the above-mentioned scheme, various optional modes about whether to execute, by the terminal, the measurement of the first cell are defined, and during the implementation, the mode may be set according to the practical need.

In some embodiments of the present disclosure in the first aspect, the determining whether the measurement of the first cell is to be executed based on the degree of overlap between the off-period and the measurement window in a case that the off-period at least partially overlaps with the measurement window of the first cell includes: determining that the measurement of the first cell is not to be executed in a case that measurement occasions for which the number is greater than or equal to a first value in the measurement window are located within the off-period; and determining that the measurement of the first cell is to be executed in a case that measurement occasions for which the number is less than the first value in the measurement window are located within the off-period.

Based on the above-mentioned scheme, various optional modes about whether to execute, by the terminal, the measurement of the first cell are defined, and during the implementation, the mode may be set according to the practical need.

In some embodiments of the present disclosure in the first aspect, the determining whether the reporting of the measurement result of the first cell is to be executed based on whether the off-period overlaps with the measurement window of the first cell includes at least one of: determining that the reporting of the measurement result of the first cell is to be executed in a case that the off-period does not overlap with the measurement window of the first cell; determining that the reporting of the measurement result of the first cell is not to be executed in a case that the off-period at least partially overlaps with the measurement window of the first cell; or determining whether the reporting of the measurement result of the first cell is to be executed based on a degree of overlap between the off-period and the measurement window in a case that the off-period at least partially overlaps with the measurement window of the first cell.

Based on the above-mentioned scheme, various optional modes about whether to execute, by the terminal, the reporting of the measurement result of the first cell are defined, and during the implementation, the mode may be set according to the practical need.

In some embodiments of the present disclosure in the first aspect, the determining whether the reporting of the measurement result of the first cell is to be executed based on the degree of overlap between the off-period and the measurement window in a case that the off-period at least partially overlaps with the measurement window of the first cell includes at least one of: determining that the reporting of the measurement result of the first cell is not to be executed in a case that measurement occasions for which the number is greater than or equal to a second value in the measurement window are located within the off-period; or determining that the reporting of the measurement result of the first cell is to be executed in a case that measurement occasions for which the number is less than the second value in the measurement window are located within the off-period.

Based on the above-mentioned scheme, various optional modes about whether to execute, by the terminal, the reporting of the measurement result of the first cell are defined, and during the implementation, the mode may be set according to the practical need. In some embodiments of the present disclosure in the first aspect, the determining the filtering method for the measurement result of the first cell based on whether the off-period overlaps with the measurement window of the first cell includes at least one of: determining that filtering of the measurement result of the first cell is to be executed using a first filtering method in a case that the off-period does not overlap with the measurement window; determining that filtering of the measurement result of the first cell is to be executed using a second filtering method in a case that the off-period at least partially overlaps with the measurement window; or determining whether filtering of the measurement result of the first cell is to be executed using a second filtering method based on an overlapping window in a case that the off-period at least partially overlaps with the measurement window.

Based on the above-mentioned scheme, whether to change, by the terminal, the filtering method during the measurement of the first cell is defined, and during the implementation, the filtering method may be set according to the practical need.

In some embodiments of the present disclosure in the first aspect, the determining whether filtering of the measurement result of the first cell is to be executed using the second filtering method based on the overlapping window in a case that the off-period at least partially overlaps with the measurement window includes determining that the filtering of the measurement result of the first cell is to be executed using the second filtering method in a case that measurement occasions for which the number is less than a third value in the measurement window are located within the off-period.

In some embodiments of the present disclosure in the first aspect, the information processing method further includes determining that the filtering of the measurement result of the first cell is not to be executed in a case that measurement occasions for which the number is greater than or equal to the third value in the measurement window are located within the off-period.

In some embodiments of the present disclosure in the first aspect, the determining that the filtering of the measurement result of the first cell is to be executed using the second filtering method includes at least one of: determining that the filtering is to be executed based on measurement values of N1 measurement occasions in the measurement window and not located within the off-period and measurement values of N2 measurement occasions before the measurement window and not located within the off-period using the second filtering method, to obtain the measurement result to be reported; or determining that the filtering is to be executed based on measurement values of N1 measurement occasions in the measurement window and not located within the off-period using the second filtering method, to obtain the measurement result to be reported.

In some embodiments of the present disclosure in the first aspect, the determining the reporting method for the measurement result of the first cell based on whether the off-period overlaps with the measurement window of the first cell includes at least one of: determining that filtering of the measurement result of the first cell is to be executed using a first reporting method in a case that the off-period does not overlap with the measurement window; or determining that filtering of the measurement result of the first cell is to be executed using a second reporting method in a case that the off-period at least partially overlaps with the measurement window.

In some embodiments of the present disclosure in the first aspect, the determining that filtering of the measurement result of the first cell is to be executed using the second reporting method in a case that the off-period at least partially overlaps with the measurement window includes at least one of: determining that the reporting of the measurement result of the first cell and first information is to be executed based on measurement values of N1 measurement occasions in the measurement window using the second reporting method; or determining that the reporting of the measurement result of the first cell and first information is to be executed based on measurement values of N1+N2 measurement occasions in the measurement window using the second reporting method. The first information is used to indicate N1 and/or N2, N1 represents the number of valid measurement occasions in the measurement window, N2 represents the number of invalid measurement occasions in the measurement window, the valid measurement occasions are located outside the off-period, and the invalid measurement occasions are located within the off-period.

In a second aspect, the present disclosure provides in some embodiments an information processing method related to cell measurement, executed by a network device, including: receiving a measurement result of a first cell and first information sent by a terminal, in which the first information is used to indicate N1 and/or N2, N1 represents the number of valid measurement occasions in a measurement window corresponding to the measurement result, N2 represents the number of invalid measurement occasions in the measurement window, the valid measurement occasions are located outside the off-period, and the invalid measurement occasions are located within the off-period; and determining whether the measurement result is a valid result based on the first information, in which the valid result is used to determine whether to add and/or remove the first cell.

Based on the above scheme, the network device conveniently determines whether the measurement result reported by the terminal is valid, so as to prevent a secondary cell of the terminal from being erroneously added and/or removed due to an invalid result.

In a third aspect, the present disclosure provides in some embodiments an information processing method related to cell measurement, executed by a network device of a second cell, including: receiving a measurement result of a first cell sent by a terminal; determining an off-period of a reference signal of the first cell; and determining whether the measurement result is a valid result based on the off-period of the reference signal of the first cell, in which the valid result is used to determine whether to add and/or remove the first cell.

Based on the above scheme, the network device conveniently determines whether the measurement result reported by the terminal is valid, so as to prevent a secondary cell of the terminal from being erroneously added and/or removed due to an invalid result.

In some embodiments of the present disclosure in the third aspect, the determining whether the measurement result is the valid result based on the off-period of the reference signal of the first cell includes: determining that the measurement result received within the off-period is an invalid result; and determining that the measurement result received outside the off-period is the valid result.

In some embodiments of the present disclosure in the third aspect, the determining the off-period of the reference signal of the first cell includes at least one of: determining the off-period of the reference signal of the first cell based on second information sent by the first cell, in which the second information is used to indicate the off-period of the reference signal of the first cell; or determining the off-period of the reference signal of the first cell based on a first indicator sent by the second cell to the first cell, in which the first indicator is used to indicate that the first cell enters or exits the off-period of the reference signal.

Based on the above scheme, the network device of the second cell conveniently determines the off-period of the first cell.

In a fourth aspect, the present disclosure provides in some embodiments an information processing method related to cell measurement, executed by a network device of a first cell, including sending second information to a second cell. The second information is used to indicate an off-period of a reference signal of the first cell, the second information is used by the second cell to determine whether a measurement result of the first cell is a valid result, and the valid result is used to determine whether to add and/or remove the first cell.

In a fifth aspect, the present disclosure provides in some embodiments a network device, including: a reception module configured to receive a measurement result of a first cell and first information sent by a terminal, in which the first information is used to indicate N1 and/or N2, N1 represents the number of valid measurement occasions in a measurement window corresponding to the measurement result, N2 represents the number of invalid measurement occasions in the measurement window, the valid measurement occasions are located outside the off-period, and the invalid measurement occasions are located within the off-period; and a processing module configured to determine whether the measurement result is a valid result based on the first information, in which the valid result is used to determine whether to add and/or remove the first cell.

In a sixth aspect, the present disclosure provides in some embodiments a terminal, including a processing module configured to determine that at least one of measurement of a first cell or reporting of a measurement result of the first cell is to be executed based on an off-period of a reference signal of the first cell.

In a seventh aspect, the present disclosure provides in some embodiments a network device, including: a reception module configured to receive a measurement result of a first cell sent by a terminal; and a processing module configured to determine an off-period of a reference signal of the first cell, and determine whether the measurement result is a valid result based on the off-period of the reference signal of the first cell. The valid result is used to determine whether to add and/or remove the first cell.

In an eighth aspect, the present disclosure provides in some embodiments a network device, including a sending module configured to send second information to a second cell. The second information is used to indicate an off-period of a reference signal of a first cell, the second information is used by the second cell to determine whether a measurement result of the first cell is a valid result, and the valid result is used to determine whether to add and/or remove the first cell.

In a ninth aspect, the present disclosure provides in some embodiments a communication device, including one or more processors. The one or more processors are configured to call instructions, so that the communication device performs the information processing method related with secondary cell measurement described in the optional embodiments of the present disclosure in the first aspect to the fourth aspect.

In a tenth aspect, the present disclosure provides in some embodiments a storage medium storing therein instructions. In a case that the instructions are executed by a communication device, the communication device performs the information processing method related with secondary cell measurement described in the optional embodiments of the present disclosure in the first aspect to the fourth aspect.

In an eleventh aspect, the present disclosure provides in some embodiments a program product. In a case that the program product is executed by a communication device, the communication device performs the information processing method related with secondary cell measurement described in the optional embodiments of the present disclosure in the first aspect to the fourth aspect.

In a twelfth aspect, the present disclosure provides in some embodiments a computer program. In a case that the computer program is executed by a computer, the computer performs the information processing method related with secondary cell measurement described in the optional embodiments of the present disclosure in the first aspect to the fourth aspect.

It should be appreciated that the terminal, the network device, the communication system, the program product and the computer program are all used to implement the methods provided in the embodiments of the present disclosure, so the beneficial effects achieved by them may refer to those of the corresponding methods, which will not be particularly defined herein.

The present disclosure provides in some embodiments an information processing method related to measurement of a secondary cell, a communication device, a communication system and a storage medium. The embodiments of the present disclosure are merely illustrative, rather than exhaustive, embodiments, and shall not be construed as limiting the protection scope of the present disclosure. In a case of no conflict, each step in one embodiment may be implemented as an independent embodiment, and the steps may be combined randomly. For example, a scheme in one embodiment obtained after removing part of steps may also be implemented as an independent embodiment. In addition, an order of the steps in one embodiment may be changed. Optional implementations in one embodiment may be combined randomly. Moreover, the embodiments may be combined randomly, e.g., part of, or all of, the steps in different embodiments may be combined randomly, and optional implementations in one embodiment may be combined randomly with those in the other embodiments.

In the embodiments of the present disclosure, in a case that there is no specific definition and logical conflict, the terms and/or descriptions in the embodiments have consistency, and may mutually refer to each other. Technical features in different embodiments may be combined to form a new embodiment based on an inherent logical relationship.

The terms used in the embodiments of the present disclosure are merely used to describe specific embodiments, but shall not be construed as limiting the present disclosure.

In the embodiments of the present disclosure, unless otherwise defined, an element in a singular form, e.g., "a/an", "the", "the aforesaid" or "this", indicates that there is one and merely one element, or there is one or more elements or at least one element. For example, in a case that a noun is defined with an article "a", "an" or "the", the noun after the article may be understood as in the singular form or a plural form.

In the embodiments of the present disclosure, "a plurality of" refers to two or more than two.

In some embodiments of the present disclosure, the expressions "at least one of", "one or more", "a plurality of" and "multiple" may be replaced with each other.

In some embodiments of the present disclosure, depending on the conditions, the expression "at least one of A or B", "A and/or B", "A in one condition, and B in another condition" and "A in response to one condition, and B in response to another condition" may include: A in some embodiments (A is performed regardless of B); B in some embodiments (B is performed regardless of A); one of A and B is performed selectively in some embodiments (one of A and B is selectively performed); and A and B are both performed in some embodiments (A and B are both performed). The same is also applied in a case that there are A, B, C, ....

In some embodiments of the present disclosure, depending on the conditions, the expression "A or B" includes: A in some embodiments (A is performed regardless of B); B in some embodiments (B is performed regardless of A); and one of A and B is performed selectively in some embodiments (one of A and B is selectively performed). The same is also applied in a case that there are A, B, C, ....

In the embodiments of the present disclosure, the terms such as "first" and "second" are only used for distinguishing objects from each other, but shall not be construed as limiting a position, an order, a priority level, the quantity or content of each object. The description about the object may refer to that in the appended claims or the context in the embodiments, and a superfluous limitation is not caused due to the use of these terms. For example, in a case that the object is "field", in the terms "first field" and "second field", the words "first" and "second" are not used to limit positions or an order of the fields, i.e., the words "first" and "second" are not used to limit whether the fields are located in the same message, or an order of the first field and the second field. For another example, in a case that the object is "level", in the terms "first level" and "second level", the words "first" and "second" are not used to limit priorities of the levels. In addition, the quantity of objects is not limited by the ordinal numeral, and the quantity may be one or more. Taking "first apparatus" as an example, the quantity of apparatuses may be one or more. Moreover, the objects defined by different ordinal numerals may be the same or different. For example, in a case that the object is "apparatus", "first apparatus" and "second apparatus" may refer to the same apparatus or different apparatuses, and types of the apparatuses may be the same or different. For another example, in a case that the object is "information", "first information" and "second information" may refer to same information or different information, and contents of the information may be the same or different.

In some embodiments of the present disclosure, the expressions "including A", "containing A", "for indicating A" and "carrying A" may be interpreted as directly carrying A, or indirectly indicating A".

In some embodiments of the present disclosure, the expressions "in response to ...", "in response to determining ...", "in a case that ...", and "if ..." may be replaced with each other.

In some embodiments of the present disclosure, the expressions "greater than", "greater than or equal to", "not less than" and "or more" may be replaced with each other, and the expressions "less than", "less than or equal to", "not greater than" and "or less" may be replaced with each other.

In some embodiments of the present disclosure, an apparatus may be a physical or virtual one, and its name is not limited to those recorded in the embodiments. The terms "apparatus", "equipment", "device", "circuit", "network element", "node", "function", "unit", "section", "system", "network", "chip", "chip system", "entity" and "body" may be replaced with each other.

In some embodiments of the present disclosure, the term "network" may be interpreted as an apparatus included in a network, e.g., access network device or core network device.

In some embodiments of the present disclosure, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier" and "bandwidth part (BWP)" may be replaced with each other.

In some embodiments of the present disclosure, the terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client" and "client" may be replaced with each other.

In some embodiments of the present disclosure, an access network device, a core network device or a network device may be replaced with a terminal. For example, the embodiments of the present disclosure may also be applied to a structure in which communication between the access network device, the core network device or the network device and the terminal is substituted with communication among a plurality of terminals (e.g., also called as device-to-device (D2D) or vehicle-to-everything (V2X)). In this case, this structure is also a structure in which the terminal has all of, or part of, functions of the access network device. In addition, the terms "uplink" and "downlink" may also be replaced with terms corresponding to the communication among the terminals (e.g., sidelink). For example, an uplink channel and a downlink channel may be replaced with sidelink channel, and an uplink and a downlink may be replaced with sidelink.

In some embodiments of the present disclosure, a terminal may be replaced with an access network device, a core network device or a network device. In this case, the access network device, the core network device or the network device has all of, or part of, the functions of the terminal.

In some embodiments of the present disclosure, the collection of data and information needs to comply with relevant laws and regulations of relevant countries.

In some embodiments of the present disclosure, the collection of data and information needs to be authorized by a user.

In addition, each element, row or column in a table in the embodiments of the present disclosure may be implemented as an independent embodiment, and any combination of the elements, rows or columns may also be implemented as an independent embodiment.

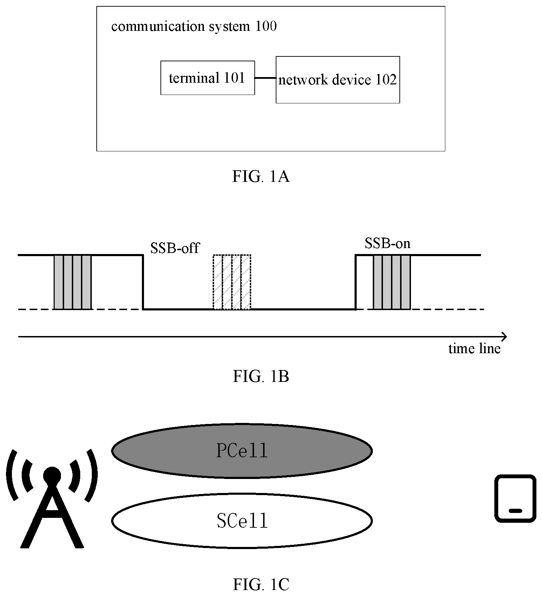

FIG. 1A is a schematic view showing architecture of a communication system according to an embodiment of the present disclosure.

As shown in FIG. 1A, the communication system 100 includes a terminal 101 and a network device 102. The network device 102 includes an access network device and/or a core network device.

In some embodiments of the present disclosure, the terminal 101 includes, but not limited to, at least one of a mobile phone, a wearable device, an Internet of Things device, a vehicle having a communication function, a smart vehicle, a pad, a computer having a wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home.

In some embodiments of the present disclosure, the terminal is also called as user equipment (UE).

In some embodiments of the present disclosure, the access network device is a node or device via which a terminal accesses a wireless network, and the access network device includes, but not limited to, at least one of an evolved NodeB (eNB) in a 5^{th}-generation (5G) communication system, a next generation eNB (ng-eNB), a next generation NodeB (gNB), node B (NB), home node B (HNB), home evolved nodeB (HeNB), a wireless backhaul device, a radio network controller (RNC), a base station controller (BSC), a base transceiver station (BTS), a base band unit (BBU), a mobile switching center, a base station in a 6^{th}-generation (6G) communication system, an Open RAN, a cloud RAN, a base station in the other communication systems, or an access node in a wireless fidelity (Wi-Fi) system.

In some embodiments of the present disclosure, the technical solution of the present disclosure may be applied to Open RAN architecture. At this time, interfaces between the access network devices or inside the access network device involved in the embodiments of the present disclosure may be changed into internal interfaces of the Open RAN, and a process and information interaction between the internal interfaces may be achieved via software or a program.

In some embodiments of the present disclosure, the access network device consists of a central unit (CU) and a distributed unit (DU). The CU is also called as control unit. Through a CU-DU structure, a protocol layer of the access network device is divided into multiple protocol layers, functions of part of the protocol layers are controlled by the CU, functions of part of, or all of, the remaining protocol layers are distributed in the DUs, and the DUs are controlled by the CU. However, the present disclosure is not limited thereto.

In some embodiments of the present disclosure, the core network device is one device which includes a first network element, or multiple devices which each includes a first network element, or a device cluster. The network element is virtual or physical. For example, a core network includes at least one of an evolved packet core (EPC), a 5G core network (5GCN), or a next generation core (NGC).

It should be appreciated that the communication system described in the embodiments of the present disclosure is used to describe the technical solutions of the present disclosure in a clearer manner, but shall not be construed as limiting the technical solutions provided in the embodiments of the present disclosure. As is known in the art, along with the evolution of the system architecture as well as the emergence of new service scenarios, the technical solutions are also applicable to similar technical problems.

The following embodiments of the present disclosure may be applied to, but not limited to, the communication system 100 in FIG. 1A, or part of bodies of the communication system 100. The bodies in FIG. 1A are for illustrative purposes, and the communication system may include all or part of the bodies in FIG. 1A, and the other bodies not shown in FIG. 1A. The quantity of bodies and the forms of the bodies may be random. The bodies may be physical or virtual. A connection relationship among the bodies is for illustrative purposes only, and the bodies may be or may not be coupled to each other, and the connection may be in any form, e.g., direct connection or indirect connection, wired connection or wireless connection.

The embodiments of the present disclosure may be applied to long term evolution (LTE), LTE-advanced (LTE-A), LTE-beyond (LTE-B), SUPER 3G, IMT-Advanced, 4^{th} generation mobile communication system (4G), 5^{th} generation mobile communication system (5G), 5G new ratio (NR), future ratio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, vehicle-to-everything (V2X), a system using the other communication method, or a next system extended based on these systems. In addition, a plurality of systems may also be used in combination (e.g., a combination of LTE and NR).

As shown in FIG. 1B, in a network energy saving scheme of an on-demand SSB, the network device may temporarily deactivate the sending of the SSB. After the deactivation of the sending of the SSB, in order to ensure normal communication of the terminal, the network device is triggered in a specific way to activate the sending of the SSB again. For example, a wake up signal (WUS) is sent by the terminal to trigger the network device to activate the sending of the SSB again. Alternatively, the network device determines whether to activate the sending of the SSB again based on data volume cached in the network device itself and/or a service demand.

In some embodiments of the present disclosure, a time period within which the sending of the SSB is deactivated is called as an off-period or off-duration, and a time period within which the sending of the SSB is activated is called as an on-period or on-duration.

As shown in FIG. 1C, in a carrier aggregation scenario, serving cells of the terminal include a primary cell and a secondary cell. The terminal performs the communication via the primary cell and the secondary cell.

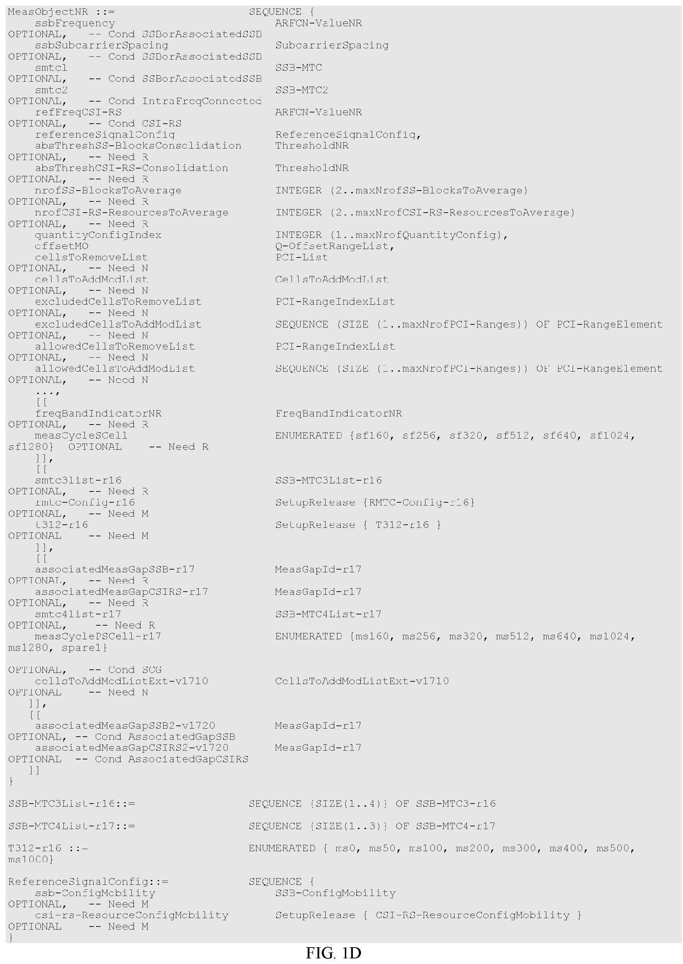

FIG. 1D shows an information element (IE) configuration of a measurement configuration of a reference signal in an NR system. The measurement configuration is a measured objected (measObject NR). A reference signal configuration (ReferenceSignalConfig) in measObject NR is used to configure parameters of the reference signal. The reference signal includes, but not limited to, a SSB and/or a CSI-RS.

Of course, measObject NR is also used to configure Threshold, ReportInterval, etc.

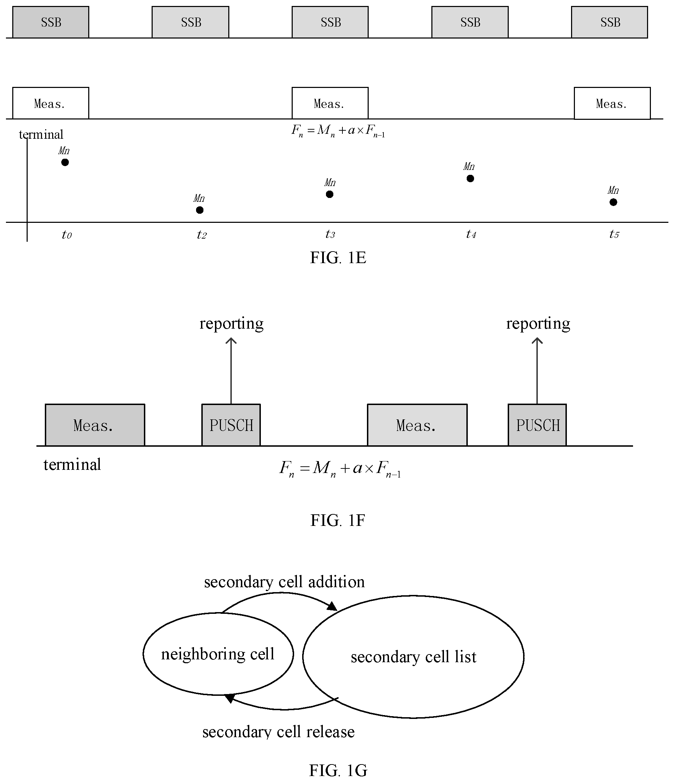

The following description will be given by taking SSB measurement as an example. As shown in FIG. 1E, the terminal measures each SSB occasion on a time domain to obtain a measurement value of a single SSB occasion, and obtains a measurement result through filtering. After reporting the measurement result to a network side, the network side adds a secondary cell or removes a secondary cell with a weak signal for the terminal based on the measurement result. *Fₙ = Mₙ + a* × *F*_{*n*-1} represents a measurement result within a previous measurement window. *Mₙ* represents a value obtained after filtering measurement values of one or more SSB occasions within a current measurement window. For example, the value obtained after filtering the measurement values of one or more SSB occasions within the current measurement window is an average value of the measurement values of one or more SSB occasions within the current measurement window. *Fₙ* represents the measurement result generated based on the measurement values within the current measurement window, and *a* represents a weight coefficient and has a value within the range of 0 to 1.

As shown in FIG. 1F, the measurement result is reported periodically. A reporting time is determined based on a reporting period, and the measurement result is sent on a physical uplink shared channel (PUSCH) at the reporting time.

FIG. 1G shows a change in states of a SCell, e.g., configuration and removal (i.e., release). For example, the network device removes a SCell with bad signal quality based on a L3 measurement result of the SCell, or adds a new SCell based on signal quality of the SCell newly measured by the terminal.

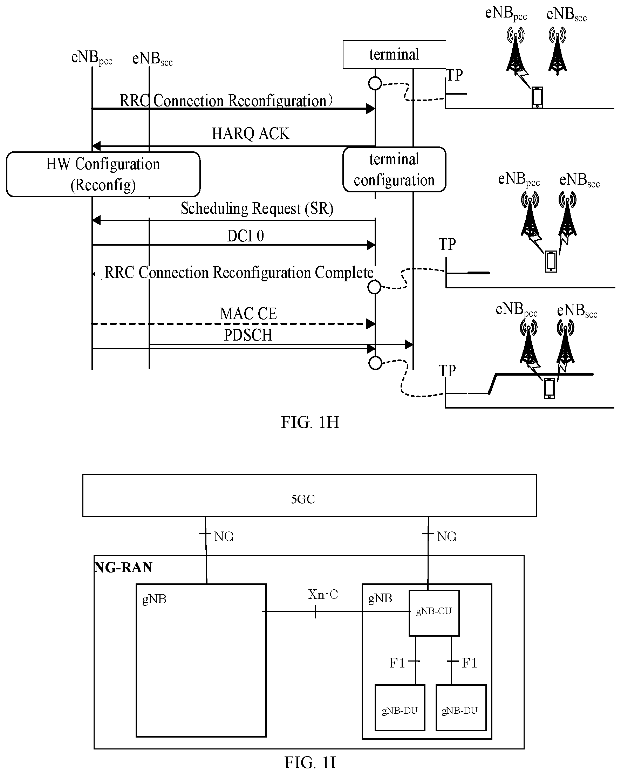

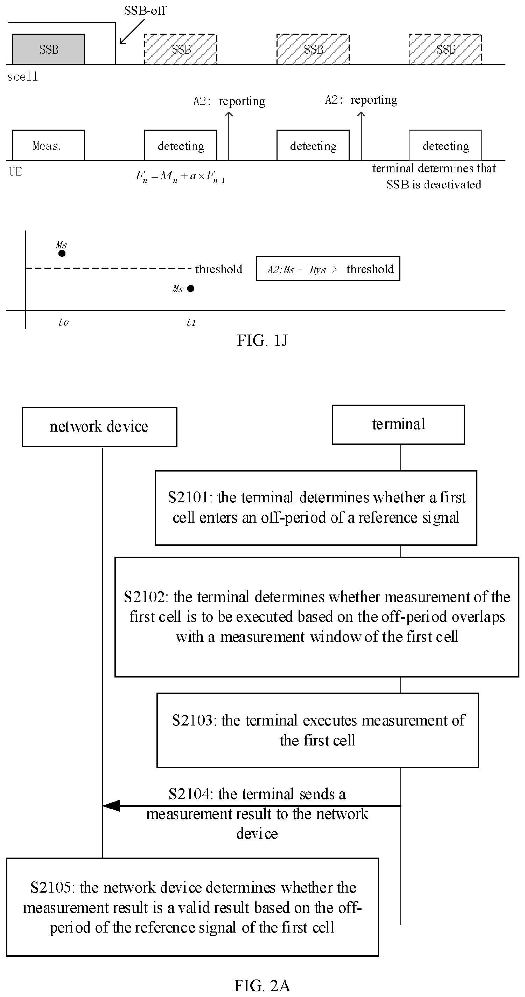

FIG. 1I is a schematic view showing communication interfaces among base stations. A core (C) network is connected to an RAN via a next generation (NG) interface. As shown in Fig. 1J, after the introduction of an on-demand SSB cell, the cell may enter a SSB off-period. A measurement result corresponding to a secondary cell (SCell) is deteriorated within the SSB off-period, so a primary cell (PCell) may erroneously remove the SCell based on the measurement result. In other words, in a case that the terminal adopts a measurement report policy and an SCell management policy defined in a current protocol, the SCell that supports the on-demand SSB technology may probably be removed erroneously. Hence, it is impossible to provide services for a user normally, and thereby the system performance and the user experience may be deteriorated.

After the SSB is activated again, the SCell which is removed erroneously may be added into a cell list again through a SCell addition process, and then it is used to serve a target user, e.g., perform data transmission continuously. However, it takes a long time to perform the measurement and the addition of the SCell again, so the system performance will be deteriorated. In addition, even after the SCell is added again through the SCell addition process, in a case that the SSB on the SCell is deactivated subsequently, the SCell may still be erroneously removed. FIG. 1H is a schematic view showing a situation where a primary cell eNB adds a secondary cell for the terminal and schedules the transmission for the secondary cell.

Based on the above, as shown in FIG. 2A, the present disclosure provides in some embodiments an information processing method related to measurement of a secondary cell, which is executed by a communication system. The information processing method includes the following steps.

S2101: a terminal determines whether a first cell enters an off-period of a reference signal.

In some embodiments of the present disclosure, the first cell is a current serving cell of the terminal, or a neighboring cell. For example, the first cell is a secondary cell of the terminal which has currently been added.

In some embodiments of the present disclosure, the terminal determines whether the first cell enters the off-period of the reference signal based on a cell indicator from a network side.

In some embodiments of the present disclosure, the terminal determines whether the first cell enters the off-period of the reference signal through cell measurement. In some embodiments of the present disclosure, the reference signal includes, but not limited to, a SSB and/or a CSI-RS.

In some embodiments of the present disclosure, the terminal measures a discovery reference signal (DRS) sent by the first cell, so as to determine whether the first cell enters the off-period of the SSB and/or the CSI-RS.

In some embodiments of the present disclosure, the terminal detects the SSB and/or the CSI-RS, and in a case that a measurement value of the SSB and/or the CSI-RS is less than a specific value (e.g., a value approaching 0), determines that the first cell has entered the off-period of the reference signal.

In some embodiments of the present disclosure, the off-period of the reference signal is a time period within which the reference signal is not sent by the first cell.

In some embodiments of the present disclosure, the off-period of the reference signal is a time period within which the sending of the reference signal is paused by the first cell.

S2102: the terminal determines whether measurement of the first cell is to be executed based on whether the off-period overlaps with a measurement window of the first cell.

In some embodiments of the present disclosure, in a case that the off-period does not overlap with the measurement window of the first cell, the terminal determines that the measurement of the first cell is to be executed.

In some embodiments of the present disclosure, in a case that the off-period at least partially overlaps with the measurement window of the first cell, the terminal determines that the measurement of the first cell is not to be executed.

In some embodiments of the present disclosure, in a case that the off-period at least partially overlaps with the measurement window of the first cell, the terminal determines whether the measurement of the first cell is to be executed based on a degree of overlap between the off-period and the measurement window.

Illustratively, in a case that measurement occasions for which the number is greater than or equal to a first value in the measurement window are located within the off-period, the terminal determines that the measurement of the first cell is not to be executed.

Illustratively, in a case that measurement occasions for which the number is less that the first value in the measurement window are located within the off-period, the terminal determines that the measurement of the first cell is to be executed.

In some embodiments of the present disclosure, the first value is less than or equal to the total number of measurement occasions in the measurement window.

In some embodiments of the present disclosure, the first value is configured by a network device, or agreed in a protocol.

S2103: the terminal executes the measurement of the first cell.

In some embodiments of the present disclosure, in a case that the measurement of the first cell is to be executed, the terminal measures the reference signal sent by the first cell.

In some embodiments of the present disclosure, in a case that the measurement of the first cell is to be executed, the terminal measures a SSB sent by the first cell.

In some embodiments of the present disclosure, in a case that the measurement of the first cell is to be executed, the terminal measures a CSI-RS sent by the first cell.

In some embodiments of the present disclosure, in a case that the measurement of the first cell is to be executed, the terminal measures reference signal received power (RSRP), reference signal received power (RSRQ) and signal to interference plus noise ratio (SINR) of the reference signal of the first cell.

In some embodiments of the present disclosure, after obtaining a measurement value of cell quality, the terminal performs L3 filtering to obtain a L3 measurement result.

In some embodiments of the present disclosure, in a case that the measurement of the first cell is to be executed and the off-period overlaps with the measurement window, the terminal determines a filtering method. The filtering method includes a first filtering method and a second filtering method. Here, the filtering method is used to average measurement values of cell quality measured each time based on SSB measurement occasions, and different filtering methods correspond to different filtering windows. In some embodiments of the present disclosure, the L3 measurement result reported by the terminal is obtained through filtering using the first filtering method, or obtained through filtering using the second filtering method.

Illustratively, in a case that measurement occasions for which the number is less than a third value in the measurement window are located within the off-period, the terminal determines that the filtering of the measurement result of the first cell is to be executed using the second filtering method.

Illustratively, the third values in the measurement windows may be the same or different.

Illustratively, in a case that measurement occasions for which the number is greater than or equal to the third value in the measurement window are located within the off-period, the terminal determines that the filtering of the measurement result of the first cell is not to be executed.

In some embodiments of the present disclosure, the determining that the filtering of the measurement result of the first cell is to be executed using the second filtering method includes at least one of: determining that the filtering is to be executed based on measurement values of N1 measurement occasions in the measurement window and not located within the off-period and measurement values of N2 measurement occasions before the measurement window and not located within the off-period using the second filtering method, to obtain the measurement result to be reported; or determining that the filtering is to be executed based on measurement values of N1 measurement occasions in the measurement window and not located within the off-period using the second filtering method, to obtain the measurement result to be reported.

S2104: the terminal sends the measurement result to the network device.

In some embodiments of the present disclosure, the terminal sends the measurement result to a network device of a primary cell.

In some embodiments of the present disclosure, the terminal sends a L3 measurement result of the first cell to the network device.

In some embodiments of the present disclosure, the terminal sends the L3 measurement result of the first cell to a network device of a second cell.

In some embodiments of the present disclosure, the second cell is a primary cell, and the first cell is a secondary cell or a candidate cell of the secondary cell.

In some embodiments of the present disclosure, the terminal performs L3 filtering on a measurement value of cell quality using any conventional technology to obtain the L3 measurement result.

In some embodiments of the present disclosure, in a case that the terminal determines to execute the measurement of the first cell, the terminal sends the measurement result to the network device based on the measurement value of the cell quality.

In some embodiments of the present disclosure, in a case that the measurement result is to be periodically reported, the terminal sends the measurement result to the network device at a report time corresponding to a report period.

In some embodiments of the present disclosure, in a case that the reporting of the measurement result is event-triggered, the terminal sends the measurement result to the network device in a case that an event is triggered.

In some embodiments of the present disclosure, a reporting method used by the terminal to report the measurement result to the network device is a first reporting method or a second reporting method.

In some embodiments of the present disclosure, in a case that the reporting method is the first reporting method, the terminal sends the measurement result obtained based on measurement values of measurement occasions in the measurement window to the network device.

In some embodiments of the present disclosure, in a case that the reporting method is the second reporting method, the terminal sends the measurement result obtained based on measurement values of valid measurement occasions in the measurement window to the network device.

The valid measurement occasions are located outside the off-period, and invalid measurement occasions are located within the off-period.

In some embodiments of the present disclosure, in a case that the reporting method is the second reporting method, the terminal sends the measurement result obtained based on the measurement values of the valid measurement occasions in the measurement window and first information to the network device.

The first information is used to indicate N1 and/or N2, N1 represents the number of valid measurement occasions in the measurement window, and N2 represents the number of invalid measurement occasions in the measurement window.

In this case, the terminal determines whether the measurement is to be executed based on an overlapping condition between the off-period and the measurement window, and in a case that the measurement is to be executed, the terminal reports the measurement result. Hence, the network device considers that all the received measurement results are valid results and may be used for secondary cell addition and/or release of the terminal.

It should be appreciated that, in some embodiments of the present disclosure, S2102 is an optional step. For example, the terminal determines a filtering method for the measurement result of the first cell based on whether the off-period overlaps with the measurement window of the first cell. In this case, the terminal definitely measures the first cell and reports the measurement result once a reporting condition is satisfied.

In some embodiments of the present disclosure, in a case that the off-period does not overlap with the measurement window, the terminal determines that filtering of the measurement result of the first cell is to be executed using a first filtering method.

In some embodiments of the present disclosure, in a case that the off-period at least partially overlaps with the measurement window, the terminal determines that the filtering of the measurement result of the first cell is to be executed using a second filtering method.

In some embodiments of the present disclosure, in a case that the off-period at least partially overlaps with the measurement window, the terminal determines whether the filtering of the measurement result of the first cell is to be executed using the second filtering method based on an overlapping window.

In some embodiments of the present disclosure, in a case that measurement occasions for which the number is less than a third value in the measurement window are located within the off-period, the terminal determines that the filtering of the measurement result of the first cell is to be executed using the second filtering method.

How to determine the filtering method may refer to the embodiment corresponding to FIG. 2A, and thus will not be particularly defined herein.

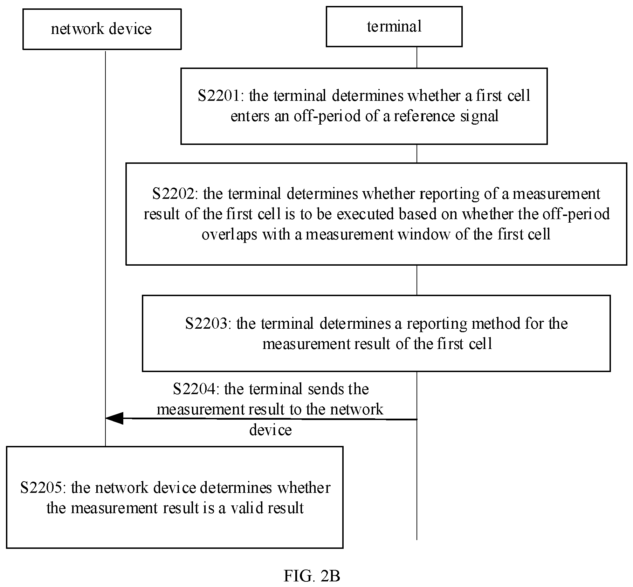

As shown in FIG. 2B, the present disclosure provides in some embodiments an information processing method related to measurement of a secondary cell, which is executed by a communication system. The information processing method includes the following steps.

S2201: a terminal determines whether a first cell enters an off-period of a reference signal.

In some embodiments of the present disclosure, the first cell is a current serving cell of the terminal, or a neighboring cell. For example, the first cell is a secondary cell of the terminal which has currently been added.

In some embodiments of the present disclosure, the terminal determines whether the first cell enters the off-period of the reference signal based on an indicator from a network side. In some embodiments of the present disclosure, the terminal determines whether the first cell enters the off-period of the reference signal through measurement. In some embodiments of the present disclosure, the reference signal includes, but not limited to, a SSB and/or a CSI-RS.

In some embodiments of the present disclosure, the off-period of the reference signal is a time period within which the reference signal is not sent by the first cell.

In some embodiments of the present disclosure, the off-period of the reference signal is a time period within which the sending of the reference signal is paused by the first cell.

It should be appreciated that, in the embodiments of the present disclosure, how to determine, by the terminal, whether the first cell enters the off-period of the reference signal may refer to S2101 in the embodiment corresponding to FIG. 2A.

S2202: the terminal determines whether reporting of a measurement result of the first cell is to be executed based on whether the off-period overlaps with a measurement window of the first cell.

In some embodiments of the present disclosure, in a case that measurement occasions for which the number is greater than or equal to a second value in the measurement window are located within the off-period, the terminal determines that the reporting of the measurement result of the first cell is not to be executed.

In some embodiments of the present disclosure, in a case that measurement occasions for which the number is less than second value in the measurement window are located within the off-period, the terminal determines that the reporting of the measurement result of the first cell is to be executed.

In some embodiments of the present disclosure, in a case that the off-period does not overlap with the measurement window, the terminal determines that filtering of the measurement result of the first cell is to be executed using a first filtering method.

In some embodiments of the present disclosure, in a case that the off-period at least partially overlaps with the measurement window, the terminal determines that filtering of the measurement result of the first cell is to be executed using a second filtering method.

In some embodiments of the present disclosure, in a case that the off-period at least partially overlaps with the measurement window, the terminal determines whether the filtering of the measurement result of the first cell is to be executed using the second filtering method based on an overlapping window.

S2203: the terminal determines a reporting method for the measurement result of the first cell.

In some embodiments of the present disclosure, in a case that reporting of the measurement result of the first cell is to be executed, the terminal determines the reporting method for the measurement result of the first cell.

The reporting method includes a first reporting method and a second reporting method.

In some embodiments of the present disclosure, the reporting method is a method for reporting a L3 measurement result of the first cell.

In some embodiments of the present disclosure, in a case that the off-period does not overlap with the measurement window, the terminal determines that the filtering of the measurement result of the first cell is to be performed using the first reporting method.

In some embodiments of the present disclosure, in a case that the off-period at least partially overlaps with the measurement window, the terminal determines that the filtering of the measurement result of the first cell is to be performed using the second reporting method.

Here, the reported measurement result may be any measurement result generated in the embodiment corresponding to FIG. 2A.

S2204: the terminal sends the measurement result to a network device.

In some embodiments of the present disclosure, the terminal sends the measurement result using the first reporting method.

In some embodiments of the present disclosure, the terminal sends the measurement result using the second reporting method.

In some embodiments of the present disclosure, the terminal reports the measurement result of the first cell and first information based on measurement values of N1 measurement occasions in the measurement window using the second reporting method.

In some embodiments of the present disclosure, the terminal reports the measurement result of the first cell and first information based on measurement values of N1+N2 measurement occasions in the measurement window using the second reporting method.

In some embodiments of the present disclosure, the first information is used indicate N1 and/or N2, N1 represents the number of valid measurement occasions in the measurement window, N2 represents the number of invalid measurement occasions in the measurement window, the valid measurement occasions are located outside the off-period, and the invalid measurement occasions are located within the off-period.

S2205: the network device determines whether the measurement result is a valid result.

In some embodiments of the present disclosure, the valid result is used to determine whether to add and/or remove the first cell.

In some embodiments of the present disclosure, the network device determines whether the measurement result is a valid result based on the first information, and the valid result is used to determine whether to add and/or remove the first cell.

In some embodiments of the present disclosure, in a case that the number of valid measurement occasions indicated in the first information is less than a first predetermined value, the network device determines that the measurement result received from the terminal is an invalid result.

In some embodiments of the present disclosure, in a case that the number of valid measurement occasions indicated in the first information is greater than or equal to the first predetermined value, the network device determines that the measurement result received from the terminal is a valid result.

In some embodiments of the present disclosure, in a case that the number of invalid measurement occasions indicated in the first information is greater than or equal to a second predetermined value, the network device determines that the measurement result received from the terminal is an invalid result.

In some embodiments of the present disclosure, in a case that the number of invalid measurement occasions indicated in the first information is less than the second predetermined value, the network device determines that the measurement result received from the terminal is a valid result.

In some embodiments of the present disclosure, in a case that N1/N2 indicated in the first information is greater than or equal to a third predetermined value, the network device determines that the measurement result received from the terminal is an invalid result.

In some embodiments of the present disclosure, in a case that N1/N2 indicated in the first information is less than the third predetermined value, the network device determines that the measurement result received from the terminal is a valid result.

In some embodiments of the present disclosure, the network device performs operations based on the valid result, e.g., addition and/or release of the first cell. In other words, the valid result serves as a basis for adding the first cell as a secondary cell of the terminal or removing the first cell from secondary cells of the terminal. Illustratively, the L3 measurement results are ranked in a descending order of cell signal quality based on the valid results. In a case that the first cell is a secondary cell of the terminal and the measurement result of the first cell is positioned at the end of a list, the first cell is removed from a secondary cell list of the terminal. In a case that the first cell is not a secondary cell of the terminal and the measurement result of the first cell is positioned at the beginning of the list, the first cell is added into the secondary cell list of the terminal.

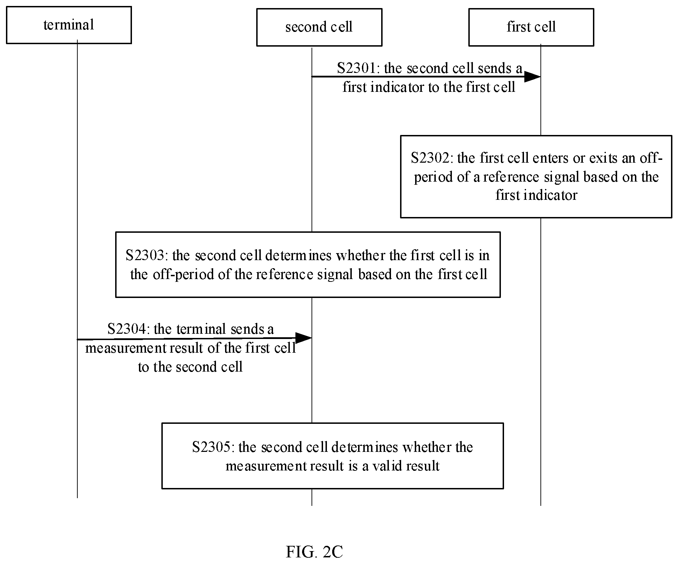

As shown in FIG. 2C, the present disclosure provides in some embodiments an information processing method related to measurement of a secondary cell, which is executed by a communication system. The information processing method includes the following steps.

S2301: a second cell sends a first indicator to a first cell.

In some embodiments of the present disclosure, the second cell is a primary cell.

In some embodiments of the present disclosure, the first cell is a secondary cell.

In some embodiments of the present disclosure, the first indicator is used to indicate the first cell to enter or exit an off-period of a reference signal.

In some embodiments of the present disclosure, the off-period of the reference signal is a time period within which the first cell does not send the reference signal.

In some embodiments of the present disclosure, the off-period of the reference signal is a time period within which the sending of the reference signal is paused by the first cell.

S2302: the first cell enters or exits the off-period of the reference signal based on the first indicator.

Illustratively, a specific content of the first indicator may refer to relevant description in the embodiments corresponding to FIG. 2A and/or FIG. 2B.

S2303: the second cell determines whether the first cell is in the off-period of the reference signal based on the first cell.

S2304: a terminal sends a measurement result of the first cell to the second cell.

It should be appreciated that the measurement result is a measurement result obtained through measuring, by the terminal, the first cell using a conventional method.

S2305: the second cell determines whether the measurement result is a valid result.

In some embodiments of the present disclosure, the second cell determines that the measurement result received within the off-period is an invalid result.

In some embodiments of the present disclosure, the second cell determines that the measurement result received outside the off-period is a valid result.

In some embodiments of the present disclosure, the valid result is used to determine whether to add and/or remove the first cell.

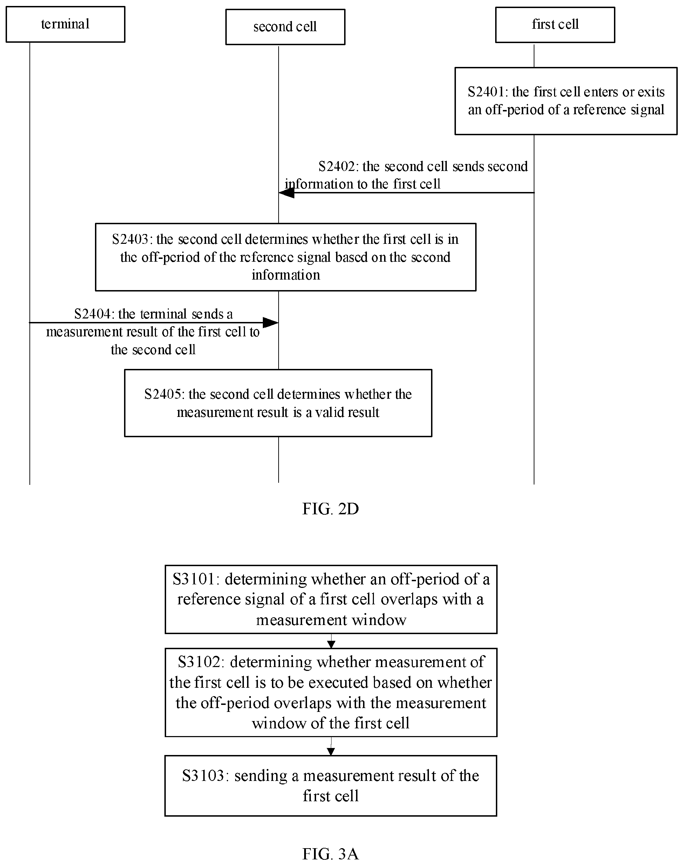

As shown in FIG. 2D, the present disclosure provides in some embodiments an information processing method related to measurement of a secondary cell, which is executed by a communication system. The information processing method includes the following steps.

S2401: a first cell enters or exits an off-period of a reference signal.

In some embodiments of the present disclosure, the first cell is a secondary cell.

S2402: a second cell sends second information to the first cell.

In some embodiments of the present disclosure, the second cell is a primary cell.

In some embodiments of the present disclosure, a first indicator is used to indicate the first cell to enter or exit the off-period of the reference signal.

In some embodiments of the present disclosure, the off-period of the reference signal is a time period within which the first cell does not send the reference signal.

In some embodiments of the present disclosure, the off-period of the reference signal is a time period within which the sending of the reference signal is paused by the first cell.

In some embodiments of the present disclosure, the second information is used to indicate the off-period of the reference signal of the first cell.

S2403: the second cell determines whether the first cell is located within the off-period of the reference signal based on the second information.

Illustratively, a specific content of the second information may refer to relevant description in the embodiments corresponding to FIG. 2A and/or FIG. 2B.

S2404: the terminal sends a measurement result of the first cell to the second cell.

It should be appreciated that the measurement result is a measurement result obtained through measuring, by the terminal, the first cell using a conventional method.

S2405: the second cell determines whether the measurement result is a valid result.

In some embodiments of the present disclosure, the second cell determines whether the measurement result of the first cell is a valid result based on whether a measurement window corresponding to the measurement result overlaps with the off-period. The valid result is used to determine whether to add and/or remove the first cell.

In some embodiments of the present disclosure, in a case that the measurement window corresponding to the measurement result does not overlap with the off-period, the second cell determines that the measurement result of the first cell is a valid result.

In some embodiments of the present disclosure, in a case that the measurement window corresponding to the measurement result at least partially overlaps with the off-period, the second cell determines that the measurement result of the first cell is an invalid result.

As shown in FIG. 3A, the present disclosure provides in some embodiments an information processing method related to cell measurement, which is executed by a terminal. The information processing method includes the following steps.

S3101: the terminal determines whether an off-period of a reference signal of a first cell overlaps with a measurement window.

In some embodiments of the present disclosure, the terminal determines the off-period of the reference signal of the first cell based on a cell indicator for the first cell.

In some embodiments of the present disclosure, the terminal determines whether the off-period overlaps with the measurement window on a time domain and/or a degree of overlap based on the determined off-period and the measurement window.

S3102: the terminal determines whether measurement of the first cell is to be executed based on whether the off-period overlaps with the measurement window of the first cell.

In some embodiments of the present disclosure, in a case that the off-period does not overlap with the measurement window of the first cell, the terminal determines that the measurement of the first cell is to be executed.

In some embodiments of the present disclosure, in a case that the off-period at least partially overlaps with the measurement window of the first cell, the terminal determines that the measurement of the first cell is not to be executed.

In some embodiments of the present disclosure, in a case that the off-period at least partially overlaps with the measurement window of the first cell, the terminal determines whether the measurement of the first cell is to be executed based on a degree of overlap between the off-period and the measurement window.

In some embodiments of the present disclosure, in a case that the off-period at least partially overlaps with the measurement window of the first cell, the terminal determines that the measurement of the first cell is not to be executed within an overlapping time period between the measurement window and the off-period.

In some embodiments of the present disclosure, in a case that measurement occasions for which the number is greater than or equal to a first value in the measurement window are located within the off-period, the terminal determines that the measurement of the first cell is not to be executed.

In some embodiments of the present disclosure, in a case that measurement occasions for which the number is less than the first value in the measurement window are located within the off-period, the terminal determines that the measurement of the first cell is to be executed.

How to determine whether the measurement of the first cell is to be executed may refer to S2102 in the embodiment corresponding to FIG. 2A.

S3103: the terminal sends a measurement result of the first cell.

In some embodiments of the present disclosure, in a case that the measurement of the first cell is to be executed, the terminal sends the measurement result of the first cell.

In some embodiments of the present disclosure, the terminal sends the measurement result of the first cell to a network device.

In some embodiments of the present disclosure, the terminal sends a L3 measurement result of the first cell to the network device.

In a case that the measurement result is to be reported periodically, the terminal sends the measurement result of the first cell to a second cell at a report time corresponding to a report period.

In a case that the reporting of the measurement result is event-triggered, the terminal sends the measurement result of the first cell to the second cell in a case that an event is triggered.

Here, the reported measurement result may be any measurement result provided in the embodiment corresponding to FIG. 2A.

In some embodiments of the present disclosure, a valid result in the measurement results is used to add or release the first cell.

In some embodiments of the present disclosure, the network device performs operations based on the valid result, e.g., addition and/or release of the first cell. In other words, the valid result serves as a basis for adding the first cell as a secondary cell of the terminal or removing the first cell from secondary cells of the terminal. Illustratively, the L3 measurement results are ranked in a descending order of cell signal quality based on the valid results. In a case that the first cell is a secondary cell of the terminal and the measurement result of the first cell is positioned at the end of a list, the first cell is removed from a secondary cell list of the terminal. In a case that the first cell is not a secondary cell of the terminal and the measurement result of the first cell is positioned at the beginning of the list, the first cell is added into the secondary cell list of the terminal.

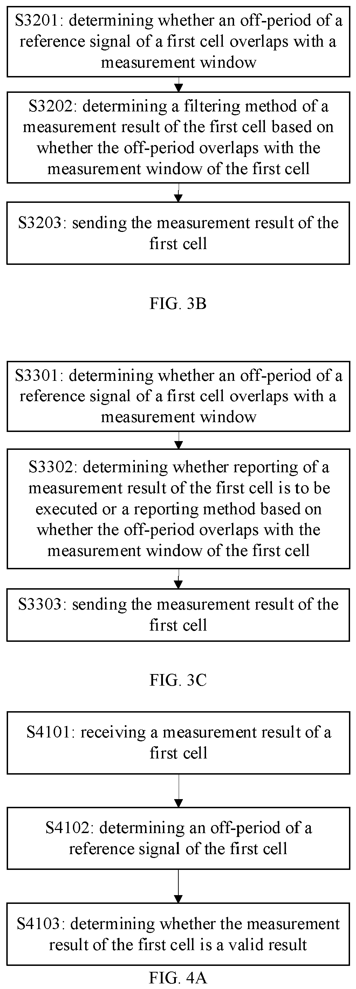

As shown in FIG. 3B, the present disclosure provides in some embodiments an information processing method related to cell measurement, which is executed by a terminal. The information processing method includes the following steps.

S3201: the terminal determines whether an off-period of a reference signal of a first cell overlaps with a measurement window.

In some embodiments of the present disclosure, the terminal determines the off-period of the reference signal of the first cell based on a cell configuration of the first cell.

In some embodiments of the present disclosure, the terminal determines the measurement window of the first cell based on a measurement configuration of the first cell.

In some embodiments of the present disclosure, the terminal determines whether the off-period overlaps with the measurement window in a time domain and/or a degree of overlap based on the determined off-period and the measurement window.

S3202: the terminal determines a filtering method for a measurement result of the first cell based on whether the off-period overlaps with the measurement window of the first cell.

In some embodiments of the present disclosure, the filtering method is a L3 filtering method for the first cell.

In some embodiments of the present disclosure, the filtering method includes a first filtering method and a second filtering method.

In a case that the off-period does not overlap with the measurement window, the terminal determines that filtering of the measurement result of the first cell is to be executed using the first filtering method.

In a case that the off-period at least partially overlaps with the measurement window, the terminal determines that the filtering of the measurement result of the first cell is to be executed using the second filtering method.

In a case that the off-period at least partially overlaps with the measurement window, the terminal determines whether the filtering of the measurement result of the first cell is to be executed using the second filtering method based on an overlapping window.

In a case that measurement occasions for which the number is less than a third value in the measurement window are located within the off-period, the terminal determines that the filtering of the measurement result of the first cell is to be executed using the second filtering method.

In some embodiments of the present disclosure, the filtering the measurement result of the first cell using the first filtering method includes performing L3 filtering uniformly at all measurement occasions in the measurement window.

How to filter the measurement result may refer to relevant description in the embodiment corresponding to FIG. 2A.

S3203: the terminal sends the measurement result of the first cell.

In some embodiments of the present disclosure, in a case that the measurement of the first cell is to be executed, the terminal sends the measurement result of the first cell.

In some embodiments of the present disclosure, the terminal sends the measurement result of the first cell to a network device.

In some embodiments of the present disclosure, the terminal sends a L3 measurement result of the first cell to the network device.

In a case that the measurement result is to be reported periodically, the terminal sends the measurement result of the first cell to a second cell at a report time corresponding to a report period.

In a case that the reporting of the measurement result is event-triggered, the terminal sends the measurement result of the first cell to the second cell in a case that an event is triggered.

Illustratively, the event includes, but not limited to, EventA1 to EventA5, and/or EventB1 to EventB2. As shown in FIG. 1J, in a case that a measurement value of a serving cell is less than a threshold, the reporting of the measurement result is executed.

Here, the reported measurement result may be any measurement result provided in the embodiment corresponding to FIG. 2A.

In some embodiments of the present disclosure, a valid result in the measurement results is used to add or release the first cell.

In some embodiments of the present disclosure, S3203 may refer to S2104.

As shown in FIG. 3C, the present disclosure provides in some embodiments an information processing method related to cell measurement, which is executed by a terminal. The information processing method includes the following steps.

S3301: the terminal determines whether an off-period of a reference signal of a first cell overlaps with a measurement window.

In some embodiments of the present disclosure, the first cell is a current serving cell of the terminal, or a neighboring cell. For example, the first cell is a secondary cell of the terminal which has been currently added.

In some embodiments of the present disclosure, the terminal determines whether the first cell enters the off-period of the reference signal based on a cell configuration at a network side. In some embodiments of the present disclosure, the terminal determines whether the first cell enters the off-period of the reference signal through cell measurement. In some embodiments of the present disclosure, the reference signal includes, but not limited to, a SSB and/or a CSI-RS.

In some embodiments of the present disclosure, the off-period of the reference signal is a time period within which the first cell does not send the reference signal.

In some embodiments of the present disclosure, the off-period of the reference signal is a time period within which the sending of the reference signal is paused by the first cell.

S3302: the terminal determines whether reporting of a measurement result of the first cell is to executed or a reporting method based on whether the off-period overlaps with a measurement window of the first cell.

In some embodiments of the present disclosure, in a case that the off-period does not overlap with the measurement window, the terminal determines that filtering of the measurement result of the first cell is to be executed using a first reporting method.

In some embodiments of the present disclosure, in a case that the off-period at least partially overlaps with the measurement window, the terminal determines filtering of the measurement result of the first cell is to be executed using a second reporting method.

In some embodiments of the present disclosure, in a case that measurement occasions for which the number is greater than or equal to a second value in the measurement window are located within the off-period, the terminal determines that the reporting of the measurement result of the first cell is not to be executed.

In some embodiments of the present disclosure, in a case that measurement occasions for which the number is less than the second value in the measurement window are located within the off-period, the terminal determines that the reporting of the measurement result of the first cell is to be executed.

S3303: the terminal sends the measurement result of the first cell.

In some embodiments of the present disclosure, the terminal sends the measurement result of the first cell using the determined reporting method.

In some embodiments of the present disclosure, the determining that the filtering of the measurement result of the first cell using the second reporting method in a case that the off-period at least partially overlaps with the measurement window includes at least one of the following.

The terminal determines that the reporting of the measurement result of the first cell and first information is to be executed using the second reporting method based on measurement values of N1 measurement occasions in the measurement window.

In some embodiments of the present disclosure, the terminal determines that the reporting of the measurement result of the first cell and the first information is to be executed using the second reporting method based on measurement values of N1+N2 measurement occasions in the measurement window.

In some embodiments of the present disclosure, the first information is used to indicate N1 and/or N2, N1 represents the number of valid measurement occasions in the measurement window, N2 represents the number of invalid measurement occasions in the measurement window, the valid measurement occasions are located outside the off-period, and the invalid measurement occasions are located within the off-period.

As shown in FIG. 4A, the present disclosure provides in some embodiments an information processing method related to cell measurement, which is executed by a network device of a second cell. The information processing method includes the following steps.

S4101: the network device receives a measurement result of a first cell.

In some embodiments of the present disclosure, the network device receives the measurement result of the first cell sent by a terminal.

The first cell is a secondary cell of the terminal, or a neighboring cell of the second cell.

In some embodiments of the present disclosure, the measurement result is a L3 measurement result.

S4102: the network device determines an off-period of a reference signal of the first cell.

In some embodiments of the present disclosure, the network device determines the off-period of the reference signal of the first cell based on a cell configuration of the first cell.

In some embodiments of the present disclosure, the network device determines the off-period of the reference signal of the first cell based on a first indicator. Illustratively, the first indicator is used to indicate that the first cell enters or exits the off-period of the reference signal.

In some embodiments of the present disclosure, the network device determines the off-period of the reference signal of the first cell based on second information. The second information is used to indicate the off-period of the reference signal of the first cell. Illustratively, the second information is reported by the second cell on its own initiative, or reported based on a second indicator from the second cell.

Illustratively, information exchange is performed between the first cell and the second cell via an inter-cell interface.

S4103: the network device determines whether the measurement result of the first cell is a valid result.

In some embodiments of the present disclosure, the valid result is used to determine whether to add and/or remove the first cell.

In some embodiments of the present disclosure, the network device determines that the measurement result received within the off-period is an invalid result.

In some embodiments of the present disclosure, the network device determines that the measurement result received outside the off-period is a valid result.

In some embodiments of the present disclosure, the valid result is used to determine whether to add and/or remove the first cell. In the embodiments of the present disclosure, the terminal executes the measurement of the first cell and/or the reporting of the measurement result using a conventional method. In some embodiments of the present disclosure, the terminal executes the measurement of the first cell and/or the reporting of the measurement result using methods in FIG. 2A and/or FIG. 2B.

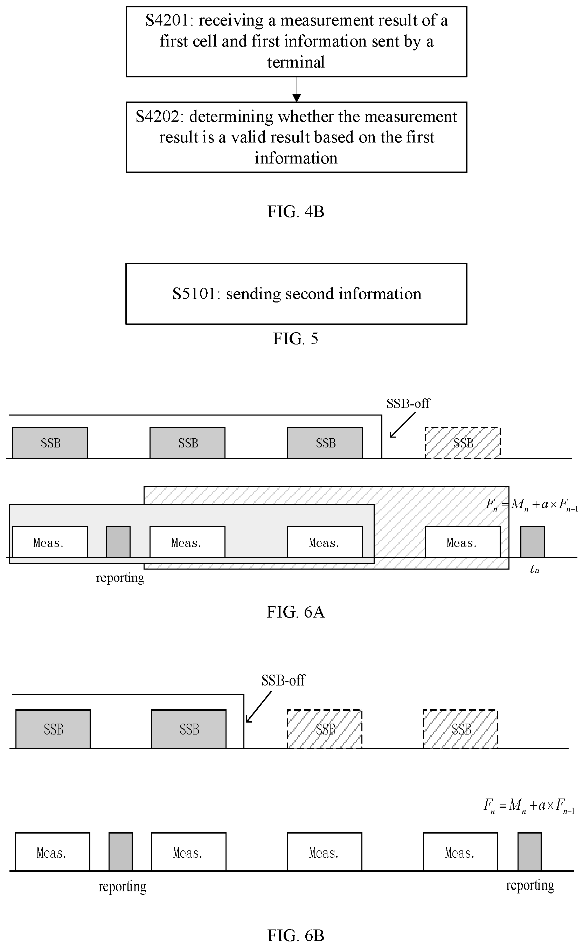

As shown in FIG. 4B, the present disclosure provides in some embodiments an information processing method related to cell measurement, which is executed by a network device. The information processing method includes the following steps.

S4201: the network device receives a measurement result of a first cell and first information sent by a terminal.

In some embodiments of the present disclosure, the first information is used to indicate N1 and/or N2, and N1 represents the number of valid measurement occasions in a measurement window corresponding to the measurement result.

In some embodiments of the present disclosure, N2 represents the number of invalid measurement occasions in the measurement window.

In some embodiments of the present disclosure, the valid measurement occasions are located outside an off-period, and the invalid measurement occasions are located within the off-period.

It should be appreciated that an optional implementation of S4201 may refer to S2304 in the embodiment corresponding to FIG. 2C.

S4202: the network device determines whether the measurement result is a valid result based on the first information.

In some embodiments of the present disclosure, the valid result is used to determine whether to add and/or remove the first cell.

It should be appreciated that an optional implementation of S4202 may refer to S2305 in the embodiment corresponding to FIG. 2C.

As shown in FIG. 5, the present disclosure provides in some embodiments an information processing method related to cell measurement, which is executed by a network device of a first cell. The information processing method includes the following steps.

S5101: the network device sends second information.

In some embodiments of the present disclosure, the second information is used to indicate an off-period of a reference signal of the first cell.

In some embodiments of the present disclosure, the second information is used by a second cell to determine whether a measurement result of the first cell is a valid result.

In some embodiments of the present disclosure, the valid result is used to determine whether to add and/or remove the first cell.

In some embodiments of the present disclosure, the first cell sends the second information to the second cell on its own initiative.

In some embodiments of the present disclosure, the first cell sends the second information to the second cell based on a second indicator sent by the second cell. In some embodiments of the present disclosure, a first indicator carries time information about candidate time points at which the first cell enters or exits the off-period of the reference signal. In this case, the first cell selects an actual time point for entering or exiting the off-period of the reference signal from the candidate time points based on the first indicator, and notifies it to the second cell via the second information.

In some embodiments of the present disclosure, the first cell determines whether to enter or exit the off-period of the reference signal by itself, and the second cell notifies, via the second information, the network device of the first cell that the first cell enters or exits the off-period of the reference signal.

In some embodiments of the present disclosure, the second information is used to indicate time information about a time point at which the first cell enters the off-period of the reference signal.

In some embodiments of the present disclosure, the second information is used to indicate time information about a time point at which the first cell exits the off-period of the reference signal.

In some embodiments of the present disclosure, the second information is used to indicate event information about an event for triggering the first cell to enter or exit the off-period of the reference signal.

In a case that a secondary cell of the terminal is a network energy savings (NES) cell which supports an on-demand SSB technology, the terminal or a base station screens measurement results of the terminal in an explicit or implicit way.

A network side determines whether to remove a corresponding secondary cell based on the measurement result obtained after screening.

At a terminal side, the terminal which supports a NES technology screens the measurement results, and reports the measurement result obtained after screening to a network. The measurement result is at least used to add and remove the secondary cell.

### First Mode

In a case that a measurement window corresponding to the measurement result coincides with a SSB off-period, the terminal does not report the measurement result.

The reporting of the measurement result includes, but not limited to, periodical reporting or event-triggered reporting.

Presumed that at least N SSB occasions are located within the SSB off-period, the terminal does not report the measurement result, where N is configured by the network or predefined.

Second Mode: in a case that the measurement window corresponding to the measurement result coincides with the SSB off-period, the terminal does not perform measurement based on the measurement window. Instead, the terminal merely performs measurement based on measurement occasions not located within the SSB off-period to obtain the measurement result. The measurement window is also called as measurement duration, measurement time or measurement gap.

The reporting of the measurement result includes periodical reporting or even-triggered reporting.

As shown in FIG. 6A, one or more SSB occasions may be located within the SSB off-period, and two of three SSB occasions in a measurement window are located within the SSB off-period. Meas. in FIG. 6A represents a measurement average.

The terminal performs the measurement as follows.

Option 1: the terminal performs the measurement based on SSB occasions not located within the SSB off-period. In order to obtain sufficient SSB occasions and thereby to obtain an valid, accurate L3 measurement result, the terminal moves the SSB occasions forward on a time domain, and performs the measurement based on a specific number of valid SSB occasions to obtain the L3 measurement result.

For example, as shown in FIG. 6A, in order to obtain a valid L3 measurement result, the terminal moves the measurement occasion forward, and obtains the L3 measurement result based on two measurement values of two SSB occasions before the SSB off-period and one measurement value of one SSB occasion after the SSB off-period (i.e., totally three measurement values).

Option 2: in a case that there is any SSB occasion within the SSB off-period during the measurement, the terminal removes the SSB occasion within the SSB off-period, and obtains the L3 measurement result based on the remaining valid SSB occasions. As shown in FIG. 6B, the terminal removes SSB occasions within the SSB off-period, and merely performs the movement based on one SSB occasion before the SSB off-period.

### Third Mode

In a case that the measurement window corresponding to the measurement result coincides with the SSB off-period, the terminal still performs the measurement and reports the measurement result. The terminal performs the reporting of the measurement result based on an existing mechanism, and reported information carries information indicating that the measurement of the reference signal (RS) is not detected or the number of measurement occasions is less than a threshold.

### At a base station side

First Mode: in a case that no measurement result is received, the network determines that the terminal enters the SSB off-period and does not report the measurement result.

Second Mode: in a case that the measurement result is received, the network determines that the measurement result is a valid result, and in a case that no measurement result is received, the network determines that the terminal enters the SSB off-period and does not report the measurement result.

Third Mode: the network normally receives the measurement result reported by the terminal, and determines validity of the measurement result based on N1 and/or N2 indicated in the first information in the measurement result.

The network determines the validity of the measurement result based on a specific value of the first information in a case that a value of the first information is not zero, and determines whether to manage secondary cells based on a determination result. In a case that the value of the first information is zero, the network determines that the measurement result is invalid, and in a case that the value of the first information is not zero, the network determines that the measurement result is valid.

Fourth Mode: a secondary cell sends an indicator/interaction information to a primary cell in a case that a SSB is to be deactivated or activated, so as to notify the primary cell of a SSB state of the secondary cell.

The interaction information at least includes a secondary cell identity (ID), SSB state information (on or off), and a start time of the SSB off-period.

The primary cell normally receives the measurement result reported by the terminal based on an existing mechanism, and determines the validity of the measurement result of the secondary cell reported by the terminal based on the interaction information.

The following embodiments will be given by taking a SSB as an example.

In a wireless communication system, in a carrier aggregation scenario, for network energy saving, a secondary cell may pause the sending of a downlink signal SSB, which however leads to that the terminal cannot normally receive the SSB for the L3 measurement. In a case that the terminal still performs the measurement based on a current measurement mode, it may report an erroneous measurement result to the network after the SSB is deactivated. Hence, the network device erroneously remove the secondary cell of the terminal or add a new secondary cell for the terminal, and thereby the network service quality is deteriorated.

In this embodiment, the following carrier aggregation scenario is taken into consideration: the network and the terminal both support NES, and the secondary cell deactivates the sending of the SSB based on an energy saving demand.

A L3 measurement method on the basis of on-demand SSB is provided in this embodiment, so as to determine a L3 measurement behavior in a secondary cell which supports on-demand SSB, and prevent the secondary cell from being erroneously removed and/or added, thereby to ensure the system performance and improve the user experience.

In an embodiment of the present disclosure, the terminal normally performs the measurement based on each SSB occasion, and in a case that the measurement window corresponding to the measurement result coincides with the SSB off-period, the terminal does not report the measurement result.

In another embodiment of the present disclosure, the terminal normally performs the measurement based on each SSB occasion, and in a case that at least N SSB occasions in the measurement window are located within the SSB off-period, the terminal does not report the measurement result, where N is configured by the network or predefined.

In a case that N is configured by the network, configuration information for configuring N is network side signaling, e.g., radio resource control (RRC) signaling, a medium access control control element (MAC CE) or downlink control information (DCI), which will not be particularly defined herein.

Reporting types of the measurement result include periodical reporting and event-triggered reporting.

In a case of the periodical reporting, the terminal still reports the measurement result or does not report the measurement result in a case that SSB occasions for which the number is greater than or equal to N in the measurement window are located within the SSB off-period.

In a case of event-triggered reporting, the terminal does not determine whether an event triggering condition is satisfied in a case that SSB occasions for which the number is greater than or equal to N in the measurement window are located within the SSB off-period, or does not report the measurement result even in a case that the event triggering condition is satisfied.

Illustratively, N is configured by the network as 2.

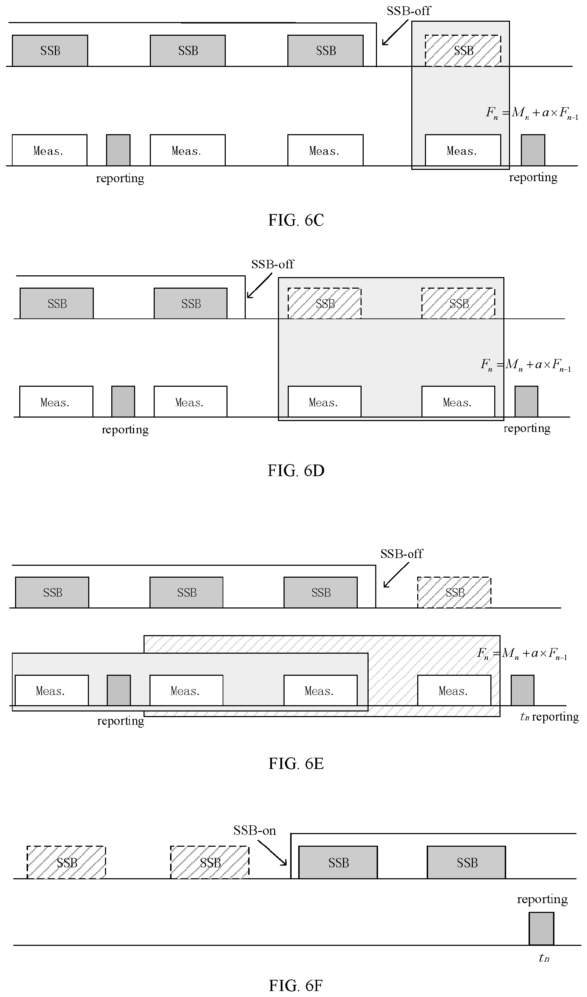

As shown in FIG. 6C, the number of measurement occasions overlapping with the SSB off-period is 1, which is less than 2. In a case of periodical reporting, the terminal reports the measurement result. In a case of event-triggered reporting, the terminal reports the measurement result as long as the condition is satisfied.

As shown in FIG. 6D, the number of measurement occasions overlapping with the SSB off-period is 2. At this time, the terminal does not report the measurement result.

In this embodiment, N is a predefined value, e.g., 1 by default. In other words, the terminal does not report the measurement result as long as there is a measurement occasion overlapping with the SSB off-period.

### Second Embodiment

In this embodiment, a carrier aggregation scenario is taken into consideration. The network and the terminal both support NES, and the secondary cell deactivates the sending of the SSB based on an energy saving demand.

In this embodiment, the terminal performs measurement merely based on the SSB occasions (measurement occasions) not overlapping with the SSB off-period, so as to obtain the measurement result. In a case that the measurement window corresponding to the measurement result coincides with the SSB off-period, the terminal does not perform the measurement.

In this embodiment, the terminal performs the measurement merely based on the SSB occasions not located within the SSB off-period. In order to obtain a specific number of SSB occasions and thereby to obtain a valid, accurate L3 measurement result, the terminal obtains the measurement result based on measurement values of SSB occasions in a current measurement window. Hence, the reported measurement result is obtained based on the measurement values of the specific number of valid SSB occasions.

The specific number is configured by the network or predefined in a protocol.

In a case of periodical reporting, the terminal reports the measurement result.

In a case of event-triggered reporting, the terminal reports the measurement result in a case that a condition is satisfied.

Illustratively, as shown in FIG. 6E, as predefined in a protocol, the number of SSB occasions for obtaining the L3 measurement result is 3.

In order to obtain the valid L3 measurement result, the terminal moves the measurement window/occasion forward, and performs the measurement based on 3 valid measurement occasions before the SSB off-period to obtain the L3 measurement result.

The terminal obtains the L3 measurement result based on the SSB occasions for which the number is predefined in a protocol.

### Third Embodiment

In this embodiment, the terminal merely performs the measurement based on the SSB occasions not located within the SSB off-period. In a case that there is any SSB occasion located within the SSB off-period, the terminal removes the SSB occasion within the SSB off-period, and obtains the L3 measurement result based on the remaining valid SSB occasions.

In this embodiment, the reporting includes, but not limited to, periodical reporting or even-triggered reporting.

In a case that it is impossible to obtain the measurement result based on the SSB occasions for which the number is predefined in a protocol, the terminal does not perform the reporting of the measurement result.

Illustratively, as shown in FIG. 6F, the number of SSB occasions predefined in a protocol for obtaining the L3 measurement result is 3. In a case that there are merely two valid SSB occasions at an occasion tn for reporting the measurement result after the terminal enters a SSB on-period, i.e., the terminal cannot obtain a valid result based on three valid SSB occasions, the terminal does not perform the reporting of the measurement result.

### Fourth Embodiment

In this embodiment, the terminal merely performs the measurement based on SSB occasions not located within the SSB off-period.

The terminal removes the SSB occasion within the SSB off-period, obtains the L3 measurement result based on the valid SSB occasions for which the number is predefined in a protocol, and then reports the L3 measurement result.

In this embodiment, the terminal determines, by itself, whether the secondary cell is in the SSB on-period through detecting the SSB.

After the SSB has been detected, the terminal performs the measurement and stores the measurement result.

After determining the SSB on-period, in a case that the valid SSB occasions for which the number is predefined in a protocol are not obtained before a reporting time point, the terminal obtains the valid SSB occasions for which the number is predefined in a protocol based on the measurement result stored within the SSB on-period determined through detecting the SSB.

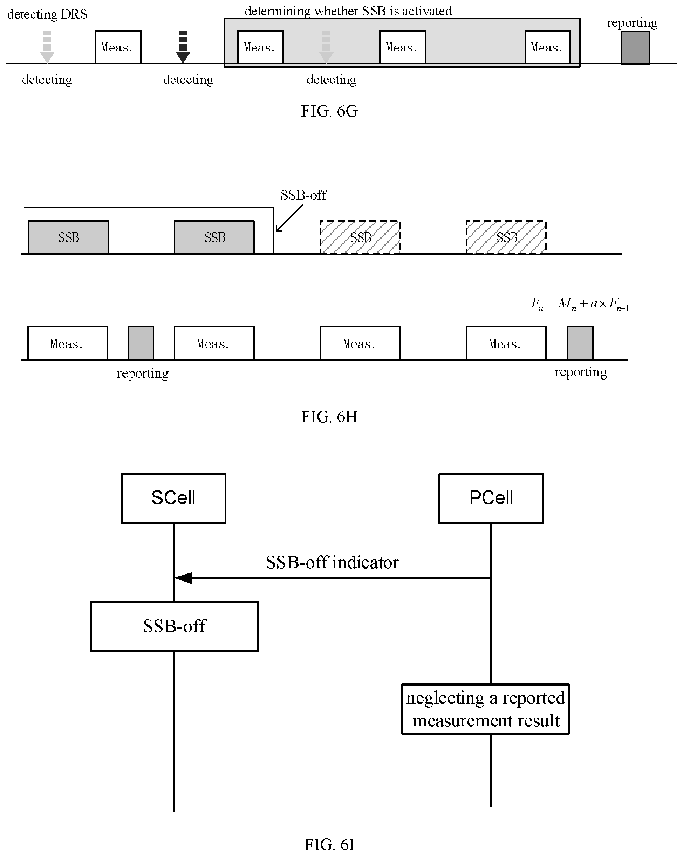

Illustratively, as shown in FIG. 6G, the number of SSB occasions predefined in a protocol for obtaining the L3 measurement result is three, and there are merely two valid SSB occasions after the activation of the SSB, the terminal performs filtering based on one measurement occasion before the SSB off-period and the two valid SSB occasions, so as to obtain the L3 measurement result.

### Fifth Embodiment

In this embodiment, the terminal merely performs the measurement based on the SSB occasions not overlapping with the SSB off-period, so as to obtain the measurement result. In a case that the measurement window corresponding to the measurement result coincides with the SSB off-period, the terminal does not perform the measurement.

In this embodiment, during the measurement, in a case that there is any SSB occasion located within the SSB off-period, the terminal does not perform the measurement based on the SSB occasion. The terminal merely performs the measurement based on the SSB occasion not located within the SSB off-period, so as to obtain the L3 measurement result. In a case of periodical reporting, the terminal reports the measurement result. In a case of event-triggered reporting, the terminal reports the measurement result as long as a condition is satisfied.

Illustratively, as shown in FIG. 6H, the terminal performs the measurement based on one measurement occasion before the SSB off-period, obtains a measurement result Mn, and performs filtering to obtain a L3 measurement result Fn. In a case of periodical reporting, the terminal reports the measurement result Fn. In a case of event-triggered reporting, the terminal reports the measurement result as long as a condition is satisfied.

### Sixth Embodiment

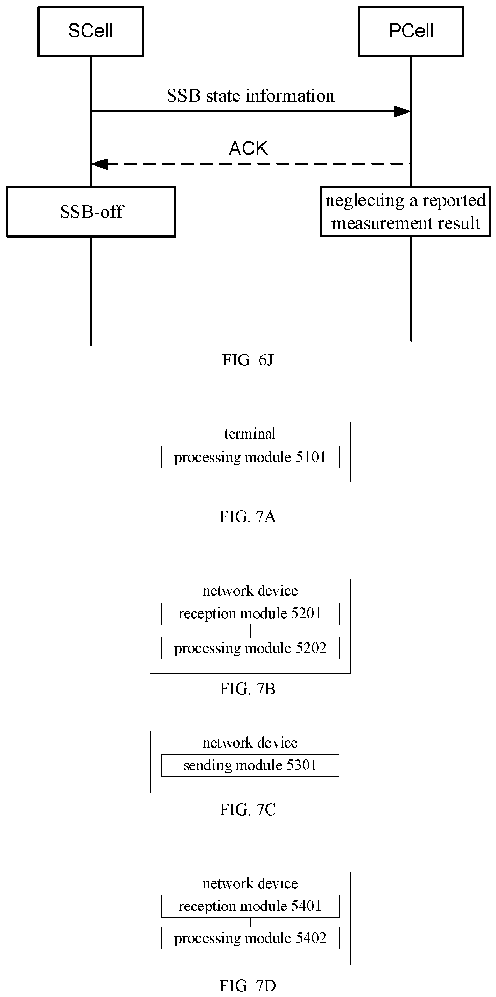

Identical to the first embodiment, in this embodiment, a carrier aggregation scenario is taken into consideration. The network and the terminal both support NES, and a secondary cell deactivates the sending of a SSB based on an energy saving demand. As shown in FIG. 6I, a primary cell (PCell) sends a SSB-off indicator to a secondary cell (SCell), and the SCell deactivates the SSB. In a case that the SSB is deactivated, the SCell does not send the SSB. As shown in FIG. 6J, the SCell further sends SSB state information to the PCell, so as to indicate the SSB off-period to the PCell.

In this embodiment, in a case that the measurement window corresponding to the measurement result coincides with the SSB off-period, the terminal still performs the measurement, and reports the measurement result.

The reporting includes periodical reporting or event-triggered reporting, and the measurement result includes first information.

The first information is used to indicate that the measurement of the reference signal (RS) is not detected or the number of SSB occasions is less than a threshold in a case that the measurement result is obtained, or indicate the number of SSB occasions which are not located within the SSB off-period and based on which the measurement result is obtained.

In this embodiment of the present disclosure, the terminal merely performs the measurement based on the SSB occasions not located within the SSB off-period.

Illustratively, the terminal performs the measurement based on one measurement occasion before the SSB off-period, obtains a measurement result Mn, and performs filtering to obtain a L3 measurement result Fn. In a case of periodical reporting, the terminal reports the measurement result Fn. In a case of event-triggered reporting, the terminal reports the measurement as long as a condition is satisfied. At this time, the first information in the reported measurement result has a value of 1.

In some embodiments of the present disclosure, the first information is further used to indicate validity of the reported measurement result. For example, the first information directly indicates that the corresponding measurement result is valid or invalid.

### Seventh Embodiment

In this embodiment, a carrier aggregation scenario is taken into consideration. The network and the terminal both support NES, and a secondary cell deactivates the sending of a SSB based on an energy saving demand. In this embodiment, the method is executed by a network device.

In this embodiment, as shown in FIG. 6I and/or FIG. 6J, in a case that the SSB is to be activated or deactivated, the secondary cell sends an indicator/interaction information to a primary cell, so as to notify the primary cell of a SSB state of the secondary cell. The interaction information at least includes a secondary cell ID and SSB state information.

In some embodiments of the present disclosure, the SSB state information indicates that the SSB is deactivated or activated.

Optionally, the SSB state information further includes a start time of the SSB off-period.

In this embodiment, the primary cell normally receives the measurement result reported by the terminal based on a conventional mechanism, and determines the validity of the measurement result of the secondary cell reported by the terminal based on the interaction information. In a case that the interaction information indicates the SSB off-period of the secondary cell, the primary cell determines that the measurement result of the secondary cell subsequently reported by the terminal is an invalid result, and does not manage the secondary cell based on the measurement result. In a case that the interaction information indicates that the SSB of the secondary cell is activated, the primary cell determines that the subsequent measurement result is a valid result.

In the embodiments of the present disclosure, with respect to the problem that a measurement result of a secondary cell is deteriorated due to an on-demand SSB and thereby the secondary cell is erroneously removed by a primary cell/primary secondary cell, a feasible scheme is proposed, so as to prevent the secondary cell from being erroneously removed, thereby to ensure the system performance and improve the user experience.

Part or all of steps and the optional implementations in the embodiments of the present disclosure may be randomly combined with part or all of steps in the other embodiments or with the optional implementations in the other embodiments.

Part or all of steps and the optional implementations in the embodiments of the present disclosure may be randomly combined with part or all of steps in the other embodiments or with the optional implementations in the other embodiments.

The present disclosure further provides in some embodiments a device for implementing any of the above-mentioned methods. For example, the present disclosure provides a device which includes units or modules for implementing the steps of any of the above-mentioned methods executed by the terminal. For another example, the present disclosure provides a device which includes units or modules for implementing the steps of any of the above-mentioned methods for the network device (e.g., an access network device or a core network device).

It should be appreciated that the above units or modules in the device are divided merely on the basis of their logic functions, and in actual use, they may be completely or partially integrated into a physical entity, or physically separated from each other. These units or modules may be implemented by calling software via a processor. For example, the device includes the processor, the processor is coupled to a memory, instructions are stored in the memory, and the processor calls the instructions in the memory to implement any of the above-mentioned methods or achieve the functions of the units or modules in the device. For example, the processor is a general-purpose processor, e.g., a central processing unit (CPU) or a micro-processor, and the memory is a memory inside or outside the device. Alternatively, the units or modules in the device may be implemented in the form of hardware circuit. The hardware circuit is designed to achieve the functions of part of, or all of, the units or modules, and the hardware circuit may be understood as one or more processors. For example, in one implementation, the hardware circuit is an application-specific integrated circuit (ASIC), and a logical relationship among elements in the circuit is designed to achieve the functions of part of, or all of, the units or modules. For another example, in another implementation, the hardware circuit is implemented via a programmable logic device (PLD). Taking a field programmable gate array (FPGA) as an example, it includes a large amount of logic gate circuits, and a connection relationship among the logic gate circuits is configured through a configuration file, so as to achieve the functions of part of, or all of, the units or modules. All the units or modules in the device may be implemented in the form of calling software by the processor, or implemented in the form of hardware circuits, or part of the units or modules may be implemented in the form of calling software by the processor and the remaining units or modules may be implemented in the form of hardware circuits.

In the embodiments of the present disclosure, the processor is a circuit having a signal processing capability. In one implementation, the processor is a circuit having a capability of reading and executing instructions, e.g., a CPU, a microprocessor, a graphics processing unit (GPU, which may also be understood as a microprocessor), or a digital signal processor (DSP). In another implementation, the processor achieves a certain function via a logic relationship of the hardware circuit, and the logic relationship of the hardware circuit is fixed or reconstructable. For example, the processor is a hardware circuit implemented via an ASIC or a PLD, e.g., FPGA. In the reconstructable hardware circuit is loaded with a configuration document to implement the configuration of the hardware circuit, i.e., the processor is loaded with instructions to implement the functions of part of, or all of, the units or modules. In addition, the processor may also be a hardware circuit designed for artificial intelligence, and it may be understood as an ASIC, e.g., a neural network processing unit (NPU), or a tensor processing unit (TPU), a deep learning processing unit (DPU).

As shown in FIG. 7A, the present disclosure provides in some embodiments a terminal, which includes a processing module 5101.

The processing module 5101 is configured to determine that at least one of measurement of a first cell or reporting of a measurement result of the first cell is to be executed based on an off-period of a reference signal of the first cell.

In some embodiments of the present disclosure, the processing module is used to enable the terminal to execute any step related to information processing in the information processing method.

In some embodiments of the present disclosure, the terminal further includes a sending module and/or a reception module.

In some embodiments of the present disclosure, the sending module and/or the reception module correspond to a network interface and/or a transmission/reception antenna of the terminal.

In some embodiments of the present disclosure, the sending module is used to enable the terminal to execute any step related to information sending in the information processing method.

In some embodiments of the present disclosure, the reception module is used to enable the terminal to execute any step related to information sending in the information processing method.

In some embodiments of the present disclosure, the processing module is configured to execute at least one of: determining whether the measurement of the first cell is to be executed based on whether the off-period overlaps with a measurement window of the first cell; determining whether the reporting of the measurement result of the first cell is to be executed based on whether the off-period overlaps with the measurement window of the first cell; determining a filtering method for the measurement result of the first cell based on whether the off-period overlaps with the measurement window of the first cell; or determining a reporting method for the measurement result of the first cell based on whether the off-period overlaps with the measurement window of the first cell.

In some embodiments of the present disclosure, the processing module is configured to: determine that the measurement of the first cell is to be executed in a case that the off-period does not overlap with the measurement window of the first cell; determine that the measurement of the first cell is not to be executed in a case that the off-period at least partially overlaps with the measurement window of the first cell; determine whether the measurement of the first cell is to be executed based on a degree of overlap between the off-time period and the measurement window in a case that the off-period at least partially overlaps with the measurement window of the first cell; or determine that the measurement of the first cell is not to be executed within an overlapping time period between the measurement window and the off-period in a case that the off-period at least partially overlaps with the measurement window of the first cell.

In some embodiments of the present disclosure, the processing module is configured to: determine that the measurement of the first cell is not to be executed in a case that measurement occasions for which the number is greater than or equal to a first value in the measurement window are located within the off-period; and determine that the measurement of the first cell is to be executed in a case that measurement occasions for which the number is less than the first value in the measurement window are located within the off-period.

In some embodiments of the present disclosure, the processing module is configured to: determine that the reporting of the measurement result of the first cell is to be executed in a case that the off-period does not overlap with the measurement window of the first cell; determine that the reporting of the measurement result of the first cell is not to be executed in a case that the off-period at least partially overlaps with the measurement window of the first cell; or determine whether the reporting of the measurement result of the first cell is to be executed based on a degree of overlap between the off-period and the measurement window in a case that the off-period at least partially overlaps with the measurement window of the first cell.

In some embodiments of the present disclosure, the processing module is configured to: determine that the reporting of the measurement result of the first cell is not to be executed in a case that measurement occasions for which the number is greater than or equal to a second value in the measurement window are located within the off-period; or determine that the reporting of the measurement result of the first cell is to be executed in a case that measurement occasions for which the number is less than the second value in the measurement window are located within the off-period.

In some embodiments of the present disclosure, the processing module is configured to: determine that filtering of the measurement result of the first cell is to be executed using a first filtering method in a case that the off-period does not overlaps with the measurement window; determine that filtering of the measurement result of the first cell is to be executed using a second filtering method in a case that the off-period at least partially overlaps with the measurement window; or determine whether filtering of the measurement result of the first cell is to be executed using the second filtering method based on an overlapping window in a case that the off-period at least partially overlaps with the measurement window.

In some embodiments of the present disclosure, the processing module is configured to determine that the filtering of the measurement result of the first cell is to be executed using the second filtering method in a case that measurement occasions for which the number is less than a third value in the measurement window are located within the off-period.

In some embodiments of the present disclosure, the processing module is configured to determine that the filtering of the measurement result of the first cell is not to be executed in a case that measurement occasions for which the number is greater than or equal to the third value in the measurement window are located within the off-period.

In some embodiments of the present disclosure, the processing module is configured to: perform filtering based on measurement values of N1 measurement occasions in the measurement window and not located within the off-period and measurement values of N2 measurement occasions before the measurement window and not located within the off-period using the second filtering method, to obtain the measurement result to be reported; or perform filtering based on measurement values of N1 measurement occasions in the measurement window and not located within the off-period using the second filtering method, to obtain the measurement result to be reported.

In some embodiments of the present disclosure, the processing module is configured to: determine that filtering of the measurement result of the first cell is to be executed using a first reporting method in a case that the off-period does not overlap with the measurement window; or determine that filtering of the measurement result of the first cell is to be executed using a second reporting method in a case that the off-period at least partially overlaps with the measurement window.

In some embodiments of the present disclosure, the processing module is configured to: report the measurement result of the first cell and first information based on measurement values of N1 measurement occasions in the measurement window using the second reporting method; or report the measurement result of the first cell and first information based on measurement values of N1+N2 measurement occasions in the measurement window using the second reporting method. The first information is used to indicate N1 and/or N2, N1 represents the number of valid measurement occasions in the measurement window, N2 represents the number of invalid measurement occasions in the measurement window, the valid measurement occasions are located outside the off-period, and the invalid measurement occasions are located within the off-period.

As shown in FIG. 7B, the present disclosure provides in some embodiments a network device, which includes a reception module 5201 and a processing module 5202. The reception module 5201 is configured to receive a measurement result of a first cell sent by a terminal. The processing module 5202 is configured to determine an off-period of a reference signal of the first cell, and determine whether the measurement result is a valid result based on the off-period of the reference signal of the first cell. The valid result is used to determine whether to add and/or remove the first cell.

In some embodiments of the present disclosure, the network device is a network device of a second cell.

In some embodiments of the present disclosure, the network device further includes a sending module.

In some embodiments of the present disclosure, the processing module is configured to execute any step related to information processing in the information processing method executed by the network device.

In some embodiments of the present disclosure, the sending module and/or reception module correspond to a network interface and/or a transmission/reception antenna of the network device.

In some embodiments of the present disclosure, the processing module is configured to perform at least one of: determining that the measurement result received within the off-period is an invalid result; and determining that the measurement result received outside the off-period is the valid result.

In some embodiments of the present disclosure, the processing module is configured to perform at least one of: determining the off-period of the reference signal of the first cell based on second information sent by the first cell; or determining the off-period of the reference signal of the first cell based on a first indicator sent by the second cell to the first cell. The second information is used to indicate the off-period of the reference signal of the first cell. The first indicator is used to indicate that the first cell enters or exits the off-period of the reference signal.

As shown in FIG. 7C, the present disclosure provides in some embodiments a network device, which includes a sending module 5301. The sending module 5301 is configured to send second information to a second cell. The second information is used to indicate an off-period of a reference signal of the first cell, the second information is used by the second cell to determine whether a measurement result of the first cell is a valid result, and the valid result is used to determine whether to add and/or remove the first cell.

As shown in FIG. 7D, the present disclosure provides in some embodiments a network device, which includes a reception module 5401 and a processing module 5402. The reception module 5401 is configured to receive a measurement result of a first cell and first information sent by a terminal. The first information is used to indicate N1 and/or N2, N1 represents the number of valid measurement occasions in a measurement window corresponding to the measurement result, N2 represents the number of invalid measurement occasions in the measurement window, the valid measurement occasions are located outside the off-period, and the invalid measurement occasions are located within the off-period. The processing module 5402 is configured to determine whether the measurement result is a valid result based on the first information. The valid result is used to determine whether to add and/or remove the first cell.

In some embodiments of the present disclosure, the network device is an access network device of a second cell.

In some embodiments of the present disclosure, the network device further includes a sending module.

In some embodiments of the present disclosure, the processing module is configured to execute any step related to information processing in the information processing method executed by the network device.

In some embodiments of the present disclosure, the sending module and/or reception module correspond to a network interface and/or a transmission/reception antenna of the network device.

The present disclosure further provides in some embodiments a communication device, which includes one or more processors. The one or more processors are configured to call instructions, so that the communication device performs the information processing method in any of the above-mentioned embodiments.

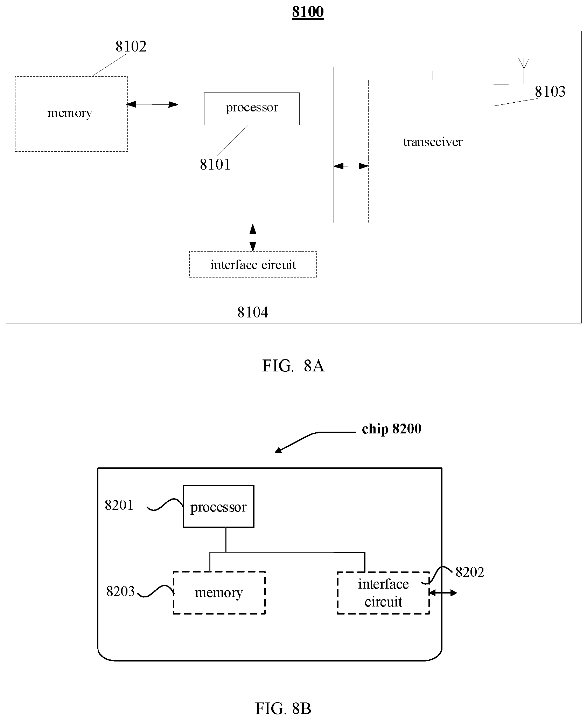

In some embodiments of the present disclosure, as shown in FIG. 8A and/or FIG. 8B, the communication device 8100 further includes one or more memories 8102 configured to store therein instructions. Optionally, all of, or part of, the memories 8102 may also be arranged outside the communication device 8100.

The communication device includes the above-mentioned terminal and network device. In some embodiments of the present disclosure, the network device includes a primary node and/or a secondary node.

In some embodiments of the present disclosure, the communication device 8100 further includes one or more transceivers 8103. In a case that the communication device 8100 includes one or more transceivers 8103, at least one of the communication steps in the above-mentioned methods, e.g., the sending steps and/or the receiving steps, is executed by the transceiver 8103, and the other steps are executed by the processor 8101.

In some embodiments of the present disclosure, the transceiver includes a receiver and/or a transmitter. The receiver is separated from, or integrated with, the transmitter. Optionally, such terms as transceiver, transceiving unit, transceiving machine and transceiving circuit may be replaced with each other, such terms as transmitter, transmission unit, transmission machine and transmission circuit may be replaced with each other, and such terms as receiver, reception unit, reception machine and reception circuit may be replaced with each other.

Optionally, the communication device 8100 further includes one or more interface circuits 8104. The interface circuit 8104 is coupled to the memory 8102. The interface circuit 8104 is configured to receive a signal from the memory 8102 or the other device, and send a signal to the memory 8102 or the other device. For example, the interface circuit 8104 is configured to read instructions stored in the memory 8102, and send the instructions to the processor 8101.

The communication device 8100 described in the above embodiments of the present disclosure is a network device or a terminal, but a scope of the communication device 8100 is not limited thereto. The structure of the communication device 8100 is not limited to that in FIG. 8A. The communication device may be an independent device or a part of a large device. For example, the communication device may be: (1) an independent integrated circuit (IC), chip, chip system or chip sub-system; (2) a set of one or more ICs (optionally, the IC set also includes a memory member for storing therein data and a computer program); (3) an ASIC, e.g., Modem; (4) a module capable of being embedded into the other device; (5) a receiver, a terminal device, a smart terminal device, a cellular phone, a wireless device, a handheld device, a mobile unit, a vehicle-mounted device, a network device, a cloud device, an artificial intelligence device, etc.; or (6) the other device.

FIG. 8B is a schematic view showing a chip 8200 according to an embodiment of the present disclosure. In a case that the communication device 8100 is a chip or a chip system, the structure may refer to the chip 8200 in FIG. 8B, but the present disclosure is not limited thereto.

The chip 8200 includes one or more processors 8201, and the one or more processors 8201 are configured to call instructions so that the chip 8200 implements any of the above-mentioned information processing methods.

In some embodiments of the present disclosure, the chip 8200 further includes one or more interface circuits 8202. The interface circuit 8202 is coupled to a memory 8203, and configured to receive a signal from the memory 8203 or the other device, and send a signal to the memory 8203 or the other device. For example, the interface circuit 8202 is configured to read instructions stored in the memory 8203, and send the instructions to the processor 8201. Optionally, such terms as interface circuit, interface, transceiver pin and transceiver may be replaced with each other.

In some embodiments of the present disclosure, the chip 8200 further includes one or more memories 8203 storing therein instructions. Optionally, all of or part of the memories 8203 may be arranged outside the chip 8200.

The present disclosure further provides in some embodiments a storage medium storing therein instructions. In a case that the instructions are executed by the communication device 8100, the communication device 8100 implements any of the above-mentioned methods. Optionally, the storage medium is an electronic storage medium. Optionally, the storage medium is a computer-readable storage medium, and it may also be any other apparatus-readable storage medium. Optionally, the storage medium is a non-transitory storage medium, and it may also be a transitory storage medium.

The present disclosure further provides in some embodiments a program product. In a case that the program product is executed by the communication device 8100, the communication device8100 implements any of the above-mentioned information processing methods. Optionally, the program product is a computer program product.

The present disclosure further provides in some embodiments a computer program. In a case that the computer program is executed by a computer, the computer implements any of the above-mentioned information processing methods.

Other embodiments of the present disclosure will be apparent to those skilled in the art from consideration of the specification and practice of the present disclosure disclosed here. This application is intended to cover any variations, uses, or adaptations of the disclosure following the general principles thereof and including such departures from the disclosure as come within known or customary practice in the art. The specification and the embodiments are for illustrative purposes only, and the true scope and the spirit of the present disclosure are set forth in the appended claims.

It should be appreciated that the present disclosure is not limited to the exact construction that has been described hereinabove and illustrated in the accompanying drawings, and various modifications and changes may be made without departing from the scope thereof. The scope of the present disclosure is only subjected to the appended claims.

## Claims

1. An information processing method related to cell measurement, executed by a terminal, comprising:
determining that at least one of measurement of a first cell or reporting of a measurement result of the first cell is to be executed based on an off-period of a reference signal of the first cell.

2. The information processing method according to claim 1, wherein the determining that at least one of the measurement of the first cell or the reporting of the measurement result of the first cell is to be executed based on the off-period of the reference signal of the first cell comprises at least one of:
determining whether the measurement of the first cell is to be executed based on whether the off-period overlaps with a measurement window of the first cell;
determining whether the reporting of the measurement result of the first cell is to be executed based on whether the off-period overlaps with the measurement window of the first cell;
determining a filtering method for the measurement result of the first cell based on whether the off-period overlaps with the measurement window of the first cell; or
determining a reporting method for the measurement result of the first cell based on whether the off-period overlaps with the measurement window of the first cell.

3. The information processing method according to claim 2, wherein the determining whether the measurement of the first cell is to be executed based on whether the off-period overlaps with the measurement window of the first cell comprises at least one of:
determining that the measurement of the first cell is to be executed in a case that the off-period does not overlap with the measurement window of the first cell;
determining that the measurement of the first cell is not to be executed in a case that the off-period at least partially overlaps with the measurement window of the first cell;
determining whether the measurement of the first cell is to be executed based on a degree of overlap between the off-period and the measurement window in a case that the off-period at least partially overlaps with the measurement window of the first cell; or
determining that the measurement of the first cell is not to be executed within an overlapping time period between the measurement window and the off-period in a case that the off-period at least partially overlaps with the measurement window of the first cell.

4. The information processing method according to claim 3, wherein the determining whether the measurement of the first cell is to be executed based on the degree of overlap between the off-period and the measurement window in a case that the off-period at least partially overlaps with the measurement window of the first cell comprises:
determining that the measurement of the first cell is not to be executed in a case that measurement occasions for which the number is greater than or equal to a first value in the measurement window are located within the off-period; and
determining that the measurement of the first cell is to be executed in a case that measurement occasions for which the number is less than the first value in the measurement window are located within the off-period.

5. The information processing method according to claim 2, wherein the determining whether the reporting of the measurement result of the first cell is to be executed based on whether the off-period overlaps with the measurement window of the first cell comprises at least one of:
determining that the reporting of the measurement result of the first cell is to be executed in a case that the off-period does not overlap with the measurement window of the first cell;
determining that the reporting of the measurement result of the first cell is not to be executed in a case that the off-period at least partially overlaps with the measurement window of the first cell; or
determining whether the reporting of the measurement result of the first cell is to be executed based on a degree of overlap between the off-period and the measurement window in a case that the off-period at least partially overlaps with the measurement window of the first cell.

6. The information processing method according to claim 5, wherein the determining whether the reporting of the measurement result of the first cell is to be executed based on the degree of overlap between the off-period and the measurement window in a case that the off-period at least partially overlaps with the measurement window of the first cell comprises at least one of:
determining that the reporting of the measurement result of the first cell is not to be executed in a case that measurement occasions for which the number is greater than or equal to a second value in the measurement window are located within the off-period; or
determining that the reporting of the measurement result of the first cell is to be executed in a case that measurement occasions for which the number is less than the second value in the measurement window are located within the off-period.

7. The information processing method according to claim 2, wherein the determining the filtering method for the measurement result of the first cell based on whether the off-period overlaps with the measurement window of the first cell comprises at least one of:
determining that filtering of the measurement result of the first cell is to be executed using a first filtering method in a case that the off-period does not overlap with the measurement window;
determining that filtering of the measurement result of the first cell is to be executed using a second filtering method in a case that the off-period at least partially overlaps with the measurement window; or
determining whether filtering of the measurement result of the first cell is to be executed using a second filtering method based on an overlapping window in a case that the off-period at least partially overlaps with the measurement window.

8. The information processing method according to claim 7, wherein the determining whether filtering of the measurement result of the first cell is to be executed using the second filtering method based on the overlapping window in a case that the off-period at least partially overlaps with the measurement window comprises:
determining that the filtering of the measurement result of the first cell is to be executed using the second filtering method in a case that measurement occasions for which the number is less than a third value in the measurement window are located within the off-period.

9. The information processing method according to claim 8, further comprising:
determining that the filtering of the measurement result of the first cell is not to be executed in a case that measurement occasions for which the number is greater than or equal to the third value in the measurement window are located within the off-period.

10. The information processing method according to claim 7 or 8, wherein
the determining that the filtering of the measurement result of the first cell is to be executed using the second filtering method comprises at least one of:
determining that the filtering is to be executed based on measurement values of N1 measurement occasions in the measurement window and not located within the off-period and measurement values of N2 measurement occasions before the measurement window and not located within the off-period using the second filtering method, to obtain the measurement result to be reported; or
determining that the filtering is to be executed based on measurement values of N1 measurement occasions in the measurement window and not located within the off-period using the second filtering method, to obtain the measurement result to be reported.

11. The information processing method according to claim 2, wherein the determining the reporting method for the measurement result of the first cell based on whether the off-period overlaps with the measurement window of the first cell comprises at least one of:
determining that filtering of the measurement result of the first cell is to be executed using a first reporting method in a case that the off-period does not overlap with the measurement window; or
determining that filtering of the measurement result of the first cell is to be executed using a second reporting method in a case that the off-period at least partially overlaps with the measurement window.

12. The information processing method according to claim 11, wherein the determining that filtering of the measurement result of the first cell is to be executed using the second reporting method in a case that the off-period at least partially overlaps with the measurement window comprises at least one of:
determining that the reporting of the measurement result of the first cell and first information is to be executed based on measurement values of N1 measurement occasions in the measurement window using the second reporting method; or
determining that the reporting of the measurement result of the first cell and first information is to be executed based on measurement values of N1+N2 measurement occasions in the measurement window using the second reporting method,
wherein the first information is used to indicate N1 and/or N2, N1 represents the number of valid measurement occasions in the measurement window, N2 represents the number of invalid measurement occasions in the measurement window, the valid measurement occasions are located outside the off-period, and the invalid measurement occasions are located within the off-period.

13. An information processing method related to cell measurement, executed by a network device, comprising:
receiving a measurement result of a first cell and first information sent by a terminal, wherein the first information is used to indicate N1 and/or N2, N1 represents the number of valid measurement occasions in a measurement window corresponding to the measurement result, N2 represents the number of invalid measurement occasions in the measurement window, the valid measurement occasions are located outside the off-period, and the invalid measurement occasions are located within the off-period; and
determining whether the measurement result is a valid result based on the first information, wherein the valid result is used to determine whether to add and/or remove the first cell.

14. An information processing method related to cell measurement, executed by a network device of a second cell, comprising:
receiving a measurement result of a first cell sent by a terminal;
determining an off-period of a reference signal of the first cell; and
determining whether the measurement result is a valid result based on the off-period of the reference signal of the first cell, wherein the valid result is used to determine whether to add and/or remove the first cell.

15. The information processing method according to claim 14, wherein the determining whether the measurement result is the valid result based on the off-period of the reference signal of the first cell comprises:
determining that the measurement result received within the off-period is an invalid result; and
determining that the measurement result received outside the off-period is the valid result.

16. The information processing method according to claim 14 or 15, wherein the determining the off-period of the reference signal of the first cell comprises at least one of:
determining the off-period of the reference signal of the first cell based on second information sent by the first cell, wherein the second information is used to indicate the off-period of the reference signal of the first cell; or
determining the off-period of the reference signal of the first cell based on a first indicator sent by the second cell to the first cell, wherein the first indicator is used to indicate that the first cell enters or exits the off-period of the reference signal.

17. An information processing method related to cell measurement, executed by a network device of a first cell, comprising:
sending second information to a second cell, wherein the second information is used to indicate an off-period of a reference signal of the first cell, the second information is used by the second cell to determine whether a measurement result of the first cell is a valid result, and the valid result is used to determine whether to add and/or remove the first cell.

18. A terminal, comprising:
a processing module configured to determine that at least one of measurement of a first cell or reporting of a measurement result of the first cell is to be executed based on an off-period of a reference signal of the first cell.

19. A network device, comprising:
a reception module configured to receive a measurement result of a first cell and first information sent by a terminal, wherein the first information is used to indicate N1 and/or N2, N1 represents the number of valid measurement occasions in a measurement window corresponding to the measurement result, N2 represents the number of invalid measurement occasions in the measurement window, the valid measurement occasions are located outside the off-period, and the invalid measurement occasions are located within the off-period; and
a processing module configured to determine whether the measurement result is a valid result based on the first information, wherein the valid result is used to determine whether to add and/or remove the first cell.

20. A network device, comprising:
a reception module configured to receive a measurement result of a first cell sent by a terminal; and
a processing module configured to determine an off-period of a reference signal of the first cell, and determine whether the measurement result is a valid result based on the off-period of the reference signal of the first cell, wherein the valid result is used to determine whether to add and/or remove the first cell.

21. A network device, comprising:
a sending module configured to send second information to a second cell, wherein the second information is used to indicate an off-period of a reference signal of a first cell, the second information is used by the second cell to determine whether a measurement result of the first cell is a valid result, and the valid result is used to determine whether to add and/or remove the first cell.

22. A communication device, comprising:
one or more processors;
wherein the one or more processors are configured to call instructions, so that the communication device performs the information processing method according to any one of claims 1 to 12, the information processing method according to claim 13, the information processing method according to any one of claims 14 to 16, and/or the information processing method according to claim 17.

23. A storage medium storing therein instructions, wherein in a case that the instructions are executed by a communication device, the communication device performs the information processing method according to any one of claims 1 to 12, the information processing method according to claim 13, the information processing method according to any one of claims 14 to 16, and/or the information processing method according to claim 17.
